# EUROPÄISCHE PATENTSCHRIFT

(11) **EP 2 915 651 B1**
(45) Veröffentlichungstag und Bekanntmachung des Hinweises auf die Patenterteilung: **22.02.2017**
(21) Anmeldenummer: 15158029.7
(22) Anmeldetag: 06.03.2015
(51) Int. Cl.: B29C 47/22, B29C 49/04

(54) **VERFAHREN ZUR HERSTELLUNG BLASGEFORMTER KUNSTSTOFFHOHLKÖRPER UND MEHRFACHEXTRUSIONSKOPF ZUR DURCHFÜHRUNG DES VERFAHRENS**
METHOD FOR THE PRODUCTION OF BLOW MOULDED PLASTIC HOLLOW BODIES AND MULTIPLE EXTRUSION HEAD FOR CARRYING OUT THE METHOD
PROCÉDÉ DE FABRICATION DE CORPS CREUX EN MATIÈRE PLASTIQUE FORMÉS PAR SOUFFLAGE ET TÊTE D'EXTRUSION MULTIPLE PERMETTANT DE RÉALISER LE PROCÉDÉ

(30) Priorität: 07.03.2014 DE 102014103101
(43) Veröffentlichungstag der Anmeldung: 09.09.2015
(73) Patentinhaber: Feuerherm, Harald, 53840 Troisdorf (DE)
(72) Erfinder: Feuerherm, Harald, Dipl.-Ing., 53840 Troisdorf (DE); Kappen, Günther, Dipl.-Ing., 53840 Troisdorf (DE); Feuerherm, Max, B. Eng., 53840 Troisdorf (DE)
(74) Vertreter: Lorenz, Bernd Ingo Thaddeus

(56) Entgegenhaltungen:
- EP-A1- 0 885 711
- EP-A1- 1 661 687
- WO-A1-2011/115511
- DE-A1- 19 829 183
- DE-A1- 19 903 084
- DE-A1-102012 104 073
- DE-A1-102012 106 509
- DE-B3-102009 058 361
- DE-U1- 9 102 433
- US-A- 4 124 351

## Beschreibung

Die Erfindung betrifft ein Verfahren zur Herstellung blasgeformter Kunststoffhohlkörper, bei dem schlauchförmige Vorformlinge aus zumindest zwei nebeneinander angeordneten Extrusionswerkzeugen eines Mehrfachextrusionskopfes zeitgleich extrudiert und Blasformkavitäten einer Schließeinheit zugeführt werden, in der die Vorformlinge nach dem Schließen der Blasformkavitäten mittels Blasluft zu Kunststoffhohlkörpern aufgeweitet werden, sowie einen Mehrfachextrusionskopf zur Durchführung des Verfahrens. Ein Mehrfachextrusionskopf zur Durchführung eines solchen Verfahrens ist beispielsweise aus EP 0 575 039 A1 bekannt.

Bei der Extrusion der Vorformlinge wird ein gleicher Schlauchlauf der Vorformlinge angestrebt. Ferner sollen die Vorformlinge zum Zeitpunkt des Schließens der Blasformkavitäten die gleiche Länge sowie eine gleiche Schmelzeverteilung aufweisen. Die Extrusionswerkzeuge können separate Gehäuse aufweisen oder zusammen in einem Gehäuse angeordnet sein. Ebenso ist es im Sinne der Erfindung, dass der Mehrfachextrusionskopf aus einer Einheit besteht oder aus mehreren nebeneinander angeordneten Einzelextrusionsköpfen gebildet wird. Es ist möglich, dass jedes Extrusionswerkzeug von einer Plastifiziereinheit gespeist wird. Alternativ können die Extrusionswerkzeuge auch über eine Anordnung zur Schmelzeverteilung mit einem zentralen Extruder verbunden sein. Die Wandung der aus den Extrusionswerkzeugen austretenden schlauchförmigen Vorformlinge kann einschichtig sein oder einen coextrudierten mehrschichtigen Aufbau aufweisen.

Aus DE 10 2007 030 677 B4 ist ein Mehrfachextrusionskopf für eine Blasformanlage bekannt, die mehrere in einer Reihe nebeneinander angeordnete Extrusionswerkzeuge umfasst. Die Extrusionswerkzeuge erstrecken sich parallel zu einer Formtrennebene der Blasformkavitäten und weisen jeweils einen Dorn und einen den Dorn umgebenden Düsenkörper auf. Der Dorn und der Düsenkörper bilden einen ringförmigen Düsenspalt, dessen Spaltbreite durch eine axiale Verstellung des Dorns oder des Düsenkörpers veränderbar ist.

EP1661687 und EP0575039 offenbaren weitere Mehrfachextrusionsköpfe nach den Oberbegriffen der Ansprüche 1 und 10.

Während der Extrusion wird durch synchrone Stellbewegungen der Dorne und/oder durch synchrone Stellbewegungen der Düsenkörper die Düsenspaltbreite aller Extrusionswerkzeuge verändert. Dadurch erhalten die Vorformlinge in axialer Richtung ein sich änderndes Wanddickenprofil, welches auf den nachfolgenden Blasformvorgang so abgestimmt ist, dass die blasgeformten Kunststoffhohlkörper über ihre gesamte Länge eine vorgegebene Wandstärke aufweisen.

Bei der Herstellung von großvolumigen blasgeformten Behältern, z. B. Kunststoffkraftstofftanks, ist es in der Praxis üblich, nicht nur die Wanddickenverteilung des aus dem Extrusionswerkzeug austretenden Vorformlings in Austragsrichtung sondern auch in Umfangsrichtung während der Extrusion dynamisch zu beeinflussen. Zur Veränderung der Schmelzeverteilung in Umfangsrichtung haben sich elastisch deformierbare Hülsen bewährt, die einen Wandabschnitt des Düsenspaltes bilden und während der Extrusion durch einen programmgesteuerten Kraftantrieb elastisch verformt werden. Das Verfahren sowie geeignete Vorrichtungen sind aus DE 28 23 999 C2 und US 6,284,169 B1 bekannt.
Mehrfachextrusionsköpfe, die mehrere in einer Reihe nebeneinander angeordnete Werkzeuge aufweisen, kommen in Blasformanlagen zum Einsatz, um kostengünstig kleine Kunststoffhohlkörper zu produzieren, die beispielsweise für flüssige Körperpflegemittel, Reinigungsmittel, Motorenöle und dergleichen verwendet werden und im Regelfall ein Füllvolumen zwischen 200 ml und 2,5l aufweisen. Diese als Verpackungen für Konsumerprodukte bestimmten Kunststoffhohlkörper weichen häufig von einer Zylinderform oder einer Kanisterform ab und haben beispielsweise die Form einer ovalen Flasche, nicht selten in Verbindung mit einer Handgriffmulde oder einem angeformten Griff. Um komplexe Behälterformen mit einer definierten einheitlichen Wandstärke produzieren zu können, ist es notwendig, die Düsenspaltgeometrie während der Extrusion der Vorformlinge in Abhängigkeit der Extrusionslänge zwischen einer Kreisringform und einer von der Kreisringform abweichenden Geometrie zu verändern.

In der Publikation "Kunststoffe" Ausgabe 12/2010, Seiten 124 bis 127 wird ein Extrusionswerkzeug beschrieben, das eine Schmelzeverteilung eines Vorformlings in Umfangsrichtung ermöglicht. Das als Nachrüstsatz konzipierte Werkzeug weist einen Düsenkörper mit zwei angeflanschten elektrischen Stellantrieben und einer elastisch deformierbaren Hülse auf. Um den Düsenspalt optimal verstellen zu können, ist es notwendig, dass die Stellantriebe in der Formtrennebene der Blasformkavitäten auf die Hülse wirken. Bei beengten Einbauverhältnissen ergeben sich Einbauprobleme. Sofern die Blasformanlage mehrere Extrusionswerkzeuge aufweist, die in einer Reihe nebeneinander angeordnet sind, bestimmt der Stichabstand zwischen den Extrusionswerkzeugen den zur Verfügung stehenden Einbauraum. Bei kleinem Stichabstand ist die Verwendung des Werkzeuges nicht möglich.

Vor diesem Hintergrund liegt der Erfindung die Aufgabe zugrunde, ein Verfahren zur Herstellung blasgeformter Kunststoffhohlkörper anzugeben, welches bei beengten Einbauverhältnissen für den Betrieb eines Mehrfachextrusionskopfes geeignet ist und an den Extrusionswerkzeugen des Mehrfachextrusionskopfes eine dynamische Profilierung des Düsenspaltes in Umfangsrichtung ermöglicht. Die technische Umsetzung des Verfahrens soll dabei einfach und kostengünstig möglich sein und somit einen schnellen Return of Invest bei voller Produktionssicherheit ermöglichen.

Gegenstand der Erfindung und Lösung dieser Aufgabe ist ein Verfahren nach Anspruch 1.

Die Erfindung setzt ein Verfahren zur Herstellung blasgeformter Kunststoffhohlkörper voraus, bei dem schlauchförmige Vorformlinge aus zumindest zwei nebeneinander angeordneten Extrusionswerk-zeugen eines Mehrfachextrusionskopfes zeitgleich extrudiert und Blasformkavitäten einer Schließeinheit zugeführt werden, in der die Vorformlinge nach dem Schließen der Blasformkavitäten mittels Blasluft zu Kunststoffhohlkörpern aufgeweitet werden.. Die Vorformlinge treten aus einem von einem Dorn und einem Düsenkörper begrenzten Düsenspalt der Extrusionswerkzeuge aus, wobei die Düsenspaltbreite der Extrusionswerk-zeuge während der Extrusion durch Stellbewegungen der Dorne und/oder eine Stellbewegung der Düsenkörper verändert wird. Erfindungsgemäß wird die Schmelzeverteilung der aus den Extrusionswerkzeugen austretenden Vorformlinge in Umfangsrichtung jeweils durch Deformation und/oder Verlagerung einer den Düsenspalt begrenzenden elastischen Hülse während der Extrusion verändert. Dazu wird jedem Extrusionswerkzeug ein programmgesteuerter Einzelantrieb zugeordnet, der mittels eines Übertragungselementes nur auf die elastisch deformierbare Hülse des zugeordneten Extrusionswerkzeuges wirkt. Die Übertragungselemente greifen jeweils in einen Bereich zwischen zwei benachbarten Extrusionswerkzeugen ein und sind dort am Umfang der elastisch deformierbaren Hülsen wirksam. Mittels der programmgesteuerten Einzelantriebe und der ihnen zugeordneten Übertragungselemente kann die Schmelzeverteilung der Vorformlinge in Umfangsrichtung der Vorformlinge während der Extrusion der Vorformlinge dynamisch gesteuert werden. Dabei kann die Position und Ausrichtung der Einzelantriebe unabhängig von der Position des Kraftangriffspunktes zwischen Übertragungselement und Hülse festgelegt werden. Das erfindungsgemäße Verfahren ist daher ohne Einschränkungen auch dann einsetzbar, wenn die Extrusionswerkzeuge mit kleinem Stichabstand in einer Reihe nebeneinander angeordnet sind. Stets ermöglicht es das erfindungsgemäße Verfahren, die Kraftwirkungsrichtung der auf den Umfang der Hülsen wirkenden Übertragungselemente unabhängig von der Position der Einzelantriebe optimal festzulegen.

Die Kraft wird in zumindest einem Kraftangriffspunkt lokal von dem Übertragungselement auf die Hülse übertragen. Dabei wirken die Übertragungselemente jeweils an zumindest einem Kraftangriffspunkt auf den Umfang der Hülsen. Der Kraftangriffspunkt kann dabei in einem Umfangsabschnitt der Hülse, der bis zu ± 45° schräg zur Formtrennebene der Blasformkavitäten ausgerichtet ist, festgelegt werden. Durch die Festlegung des Kraftangriffpunktes ist eine Optimierung möglich, ohne dass hierdurch die Position des dem Extrusionswerkzeug zugeordneten Einzelantriebs verändert werden müsste. Üblicherweise befindet sich der Kraftangriffspunkt zwischen der Hülse und dem Übertragungselement in einem Umfangsabschnitt der Hülse, der sich bezogen auf die Formtrennebene der Blasformkavitäten über einen Winkel von maximal ± 22,5° erstreckt.

Vorzugsweise wirkt das Übertragungselement an zumindest einem Kraftangriffspunkt auf den Umfang der Hülse, der in der Formtrennebene der Blasformkavitäten liegt, wobei die Kraftwirkungsrichtung des Übertragungselementes im Kraftangriffspunkt radial zur Mittelachse der Hülse ausgerichtet ist. Bei dieser Anordnung wirkt das Übertragungselement in der Hauptdeformationsachse, die in der Formtrennebene liegt, auf die elastisch deformierbare Hülse.

In den meisten Fällen werden die Blasformkavitäten zur Aufnahme der Vorformlinge unterhalb der Extrusionswerkzeuge positioniert. Alternativ können die aus den Extrusionswerkzeugen extrudierten Vorformlinge mittels eines Greifers erfasst und dann den Blasformkavitäten zugeführt werden, so dass die Formtrennebene und die Ausrichtung der Extrusionswerkzeuge versetzt sein können. In diesem Fall ist das Merkmal, dass der Kraftangriffspunkt zwischen Übertragungselement und Hülse in der Formtrennebene der Blasformkavitäten liegt, verwirklicht, wenn der zu dem Kraftangriffspunkt benachbarte Abschnitt des schlauchförmigen Vorformlings beim Schließen der Blasformkavität in der Formtrennebene liegt.

Das erfindungsgemäße Verfahren eignet sich insbesondere zur Herstellung von Kunststoffhohlbehältern, die zur Verpackung von flüssigen Produkten eingesetzt werden und die Form einer Flasche mit angeformtem Griff oder Handgriffmulde aufweisen. Die genannten Behälter zeichnen sich unter anderem dadurch aus, dass sie spiegelsymmetrisch zur Formtrennebene sind, während sie quer zur Formtrennebene eine asymmetrische Form besitzen. Die aus den Blasformkavitäten ausgeformtem Behälter weisen an ihrem oberen und unteren Ende eine Quetschnaht bzw. einen Abfallbutzen auf, der sich über Teilbereiche des Behälters erstreckt.

Zur Durchführung des erfindungsgemäßen Verfahrens werden vorzugsweise elastisch deformierbare Hülsen verwendet, die bei einer punktförmigen Einleitung einer auf den Umfang wirkenden radialen Kraft ein über den gesamten Umfang definiertes stetiges Deformationsverhalten aufweisen. Durch Betätigung der Einzelantriebe werden die Kräfte zur Deformation der Hülsen lokal am Umfang der Hülsen auf die Hülse aufgeübt, welche sich unter der Wirkung dieser Kräfte in Umfangsrichtung stetig verformt. Dabei bildet sich aufgrund der Wechselwirkung zwischen den lokal eingeleiteten Kräften und den dadurch erzeugten inneren Kräften und Momenten über den gesamten Umfang der Hülse ein definiertes Profil. Eine zylindrische Hülse kann durch Einleitung lokaler Kräfte beispielsweise eine ovale Form erhalten. Vorzugsweise werden elastisch deformierbare Hülsen verwendet, die aus einem Stück einwandig gefertigt sind.

Zur Erhöhung der Positionierungsgenauigkeit ist es vorteilhaft, die Stellbewegung der Einzelantriebe so zu untersetzen, dass ein großer Verstellweg auf der Antriebsseite eine kleine Deformationsbewegung der Hülse zur Folge hat. Durch die entsprechende Erhöhung der Stellkräfte bei der Deformationsbewegung können dann auch vergleichsweise kleine und damit kostengünstige Antriebe eingesetzt werden. Eine Untersetzung kann beispielsweise durch ein mechanisches Getriebe, insbesondere eine Kniehebelanordnung, realisiert werden.

Die Extrusionswerkzeuge sind in einer Reihe oder mehrere Reihen nebeneinander angeordnet. Die Verformung aller in einer Reihe nebeneinander angeordneten Hülsen erfolgt vorzugsweise in der selben Deformationsachse, wobei die Deformationsachse mit einer Achse der nebeneinander angeordneten Extrusionswerkzeuge zusammenfällt und in der Formtrennebene oder parallel zur Formtrennebene verläuft.

Eine erste, besonders einfache Ausführung des erfindungsgemäßen Verfahrens sieht vor, dass die Übertragungselemente bei einer Stellbewegung ihres zugeordneten Antriebs auf eine außenliegende Mantelfläche der Hülsen wirken und dass die Hülsen an mindestens einem umfangsseitig angeordneten Gegenlager abgestützt und/oder angebunden werden. Das Gegenlager ist zweckmäßig um 180° versetzt zum Kraftangriffspunkt des Übertragungselementes angeordnet. Die Hülsen können auch an mehreren an ihrem Umfang angeordneten Gegenlagern abgestützt werden. Durch die Anzahl und Position der Gegenlager kann die Verformungsgeometrie beeinflusst werden. Sind Gegenlager und/oder Übertragungselemente zumindest mittelbar mit der Hülse verbunden, so kann die Deformation der Hülse sowohl durch Druck- als auch durch Zugkräfte erfolgen.

Das Übertragungselement kann eine Gelenkanordnung aufweisen, die auf die Hülse wirkt.

Im Rahmen der Erfindung liegt es auch, Hülsen einzusetzen, die im entspannten Zustand eine definierte Ovalität aufweisen. Die Hülsen werden zweckmäßig so eingebaut, dass die große Hauptachse der Hülsen in der Deformationsachse liegt. Die Überragungselemente liegen an der Hülse an, ohne jedoch fest mit dieser verbunden sein zu müssen. Die Verwendung vorovalisierter Hülsen eignet sich insbesondere für Stellelemente, die vorzugsweise nicht fest an die Hülse angeschlossen sind.

Das einem Einzelantrieb zugeordnete Übertragungselement kann kinematisch gekoppelte Elemente aufweisen, die paarweise auf die Hülse wirken und bei einer Stellbewegung des Einzelantriebes beidseits radiale Druckkräfte oder Zugkräfte auf die zugeordnete Hülse ausüben. Sofern nur Druckkräfte auf die Hülsen wirken, können sowohl einwandige als auch mehrlagige Hülsen (Flexringe) verwendet werden. Wenn die Hülsen auch durch Zugkräfte verformt werden, können keine mehrlagige Flexringe verwendet werden; statt dessen werden vorzugsweise einwandige Hülsen eingesetzt. Sind die Übertragungselemente formschlüssig oder gelenkig mit den Hülsen verbunden, so können bei der beschriebenen Ausführung auch ziehende Kräfte übertragen werden.

Wenn auf die Hülsen gleichgroße Zug- oder Druckkräfte mantelseitig aufgebracht werden, so werden die Hülsen - insbesondere wenn einwandige Hülsen verwendet werden - symmetrisch verformt. Der Querschnitt der Hülse nimmt dabei zumindest in der Ebene, in der die radialen Zug- und/oder Druckkräfte aufgebracht werden, einen ovalen Querschnitt oder zumindest eine an eine Ellipse angenäherte Grundform an. Je nach Lagerung der Hülse und/oder der Lage des Kraftangriffspunktes in Extrusionsrichtung ist die Deformation der Hülse durch die Krafteinwirkung in Längsrichtung konstant oder erreicht von einem minimalen Wert am Hülseneinlauf zum Düsenaustritt hin einen Maximalwert.

Das erfindungsgemäße Verfahren ist nicht darauf beschränkt, dass die Hülsen durch radial auf die Mantelfläche der Hülsen wirkenden Druck- oder Zugkräfte nur elastisch verformt werden. Im Rahmen der Erfindung ist es auch möglich, dass die Hülsen durch in radialer Richtung wirkende Druck- oder Zugkräfte verschwenkt oder radial verschoben werden. Schiebe-, Schwenk- und Deformationsbewegungen können dabei miteinander kombiniert werden, um die Geometrie des Düsenspaltes während der Extrusion der Vorformlinge stark zu verändern. Durch die Kombination von radial angreifenden Zug- und Druckkräften, die um 180° zueinander versetzt am Umfang der Hülse angreifen, können die Hülsen seitwärts bewegt und je nach der Lagerung der Hülsen entweder verschwenkt oder radial verschoben werden. Sofern radiale Stellbewegungen mit unterschiedlichem Stellweg ausgeführt werden, können die Hülsen sowohl elastisch verformt als auch gleichzeitig in radialer Richtung seitwärts bewegt werden. In all diesen Fällen ist eine sehr starke Profilierung der Düsenspaltgeometrie möglich. Die elastisch deformierbaren Hülsen können auf einer horizontalen Fläche eines Trägers abgestützt werden. Alternativ können die Hülsen an ihrem oberen Ende im Extrusionswerkzeug auch vertikal beweglich geführt oder kippbeweglich gelagert werden. Mittels Übertragungselementen, welche auf das düsenaustrittsseitige Ende der Hülsen wirken und gelenkig mit den Hülsen verbunden sind, können die Hülsen verschwenkt werden.

Die Kraftangriffspunkte der Übertragungselemente werden bei allen zuvor beschriebenen Ausführungen des erfindungsgemäßen Verfahrens zweckmäßig an den Hülsen so festgelegt, dass ihre Kraftwirkungsrichtung mit der Formtrennebene der Blasformkavitäten fluchtet.

Gemäß einer bevorzugten Ausführung des erfindungsgemäßen Verfahrens werden jedem Extrusionswerkzeug des Mehrfachextrusionskopfes zwei programmgesteuerte Einzelantriebe zugeordnet, die mittels zugeordneter Übertragungselemente nur auf die elastisch deformierbare Hülse des zugeordneten Extrusionskopfes wirken und Zugkräfte oder Druckkräfte auf eine Mantelfläche der Hülse ausüben. Durch programmgesteuerte Stellbewegung der beiden Einzelantriebe wird die Hülse deformiert, verschwenkt oder radial verschoben. Die Hülsen können jeweils durch gegenläufige, im Betrag gleichgroße Verstellwege der auf sie wirkenden Übertragungselemente deformiert werden. Die Hülsen können ferner durch im Betrag unterschiedliche Verstellwege deformiert sowie in Richtung der Deformationsachse verschwenkt oder radial verschoben werden. Schließlich können die Hülsen durch gleichgerichtete, gleichgroße Verstellbewegungen der Übertragungselemente ohne Deformation radial verschwenkt oder verschoben werden.

In den Extrusionswerkzeugen können unabhängige Grundeinstellungen vorgenommen werden, wobei im Zuge dieser Einstellungen die Hülsen vordeformiert werden und/oder die Position der Hülsen korrigiert wird und/oder der Düsenkörper und der Dorn relativ zueinander verstellt werden. Die Möglichkeit, an den Extrusionswerkzeugen unabhängige Grundeinstellungen vornehmen zu können, ist vorteilhaft, da bei der Herstellung von kleinen blasgeformten Hohlkörpern bereits kleine Unterschiede des Düsenspaltes von einem Extrusionswerkzeug zum anderen Extrusionswerkzeug signifikante Wanddickenunterschiede der blasgeformten Hohlkörper zur Folge haben. Ferner ist zu berücksichtigen, dass die Extrusionswerkzeuge von einer Plastifiziereinheit oder auch von mehreren Plastifiziereinheiten mit Kunststoffschmelze versorgt werden können. Beide Varianten können aus verschiedenen Gründen zu rheologischen Unterschieden zwischen den einzelnen Vorformlingen führen. Das rheologische Verhalten der Kunststoffschmelze, Fertigungstoleranzen in den Fließkanälen der Extrusionswerkzeuge und ein Temperatureinfluss können dazu führen, dass der Schlauchlauf der parallel aus den Extrusionswerkzeugen austretenden Vorformlinge sowie die radiale Wanddickenverteilung der einzelnen Vorformlinge voneinander abweichen. Zur Korrektur weisen die Extrusionswerkzeuge daher vorzugsweise individuell zugeordnete und voneinander unabhängig betätigbare Stellelemente zur Veränderung einer Grundeinstellung der Düsenspaltgeometrie auf.

Gegenstand der Erfindung ist auch ein zur Durchführung des beschriebenen Verfahrens geeigneter Mehrfachextrusionskopf nach Anspruch 10.

Zum grundsätzlichen Aufbau des Mehrfachextrusionskopfes gehören zumindest zwei nebeneinander angeordnete Extrusionswerkzeuge, die jeweils einen von einem Dorn und einem Düsenkörper begrenzenden Düsenspalt aufweisen. Es können mehrere Extrusionswerkzeuge nebeneinander angeordnet sein. Die Extrusionswerkzeuge können einzeln an dem Mehrfachextrusionskopf montiert sein oder zur Realisierung eines Schnellrüstvorganges auf einem gemeinsamen Träger angeordnet sein, der mit dem Mehrfachextrusionskopf verbunden ist. Die Extrusionswerkzeuge sind jeweils mit mindestens einer elastisch deformierbaren Hülse ausgestattet, die einen Wandabschnitt des Düsenspaltes bildet und im Düsenkörper des Extrusionswerkzeuges angeordnet ist. Jedem Extrusionswerkzeug ist zumindest ein programmgesteuerter Einzelantrieb zugeordnet, der mittels eines Übertragungselementes nur auf die elastisch deformierbare Hülse des zugeordneten Extrusionswerkzeuges wirkt. Die Übertragungselemente greifen jeweils in den Bereich zwischen benachbarten Extrusionswerkzeugen ein und sind dort an einem Umfangsabschnitt der dem Einzelantrieb zugeordneten elastisch deformierbaren Hülse wirksam. Als Übertragungselemente können beliebige Mittel eingesetzt werden, die auf eine außenliegende Mantelfläche der Hülsen wirken und drückende oder ziehende Bewegungen auf die Hülsen übertragen.

Vorzugsweise weisen die Übertragungselemente ein Gestänge auf, welches einen Stellhub des mit dem Gestänge verbundenen Einzelantriebs in einen an der elastisch deformierbaren Hülse wirksamen kleineren Stellweg untersetzt.

Vorteilhafte Ausgestaltungen des erfindungsgemäßen Mehrfachextrusionskopfes werden in den Patentansprüchen beschrieben und nachfolgend anhand von Ausführungsbeispielen erläutert. Es zeigen schematisch:
- Fig. 1A: eine mit einem Mehrfachextrusionskopf ausgestattete Blasformanlage zur Herstellung blasgeformter Kunststoffhohlkörper in einer Seitenansicht,
- Fig. 1B: eine stark vereinfachte Draufsicht auf die Extrusionswerkzeuge des in Fig. 1A dargestellten Mehrfachextrusionskopfes,
- Fig. 2: einen Längsschnitt durch ein Extrusionswerkzeug aus der Blickrichtung A in Fig. 1B,
- Fig. 3: einen Schnitt durch den in Fig. 2 dargestellten Mehrfachextrusionskopf in der Schnittebene II-II der Fig. 2,

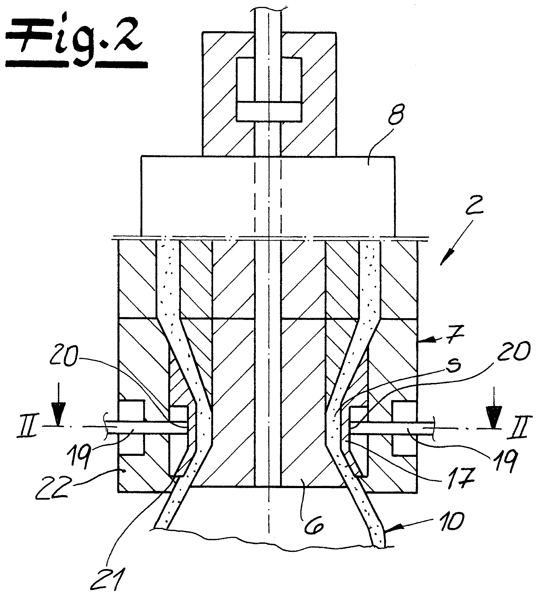

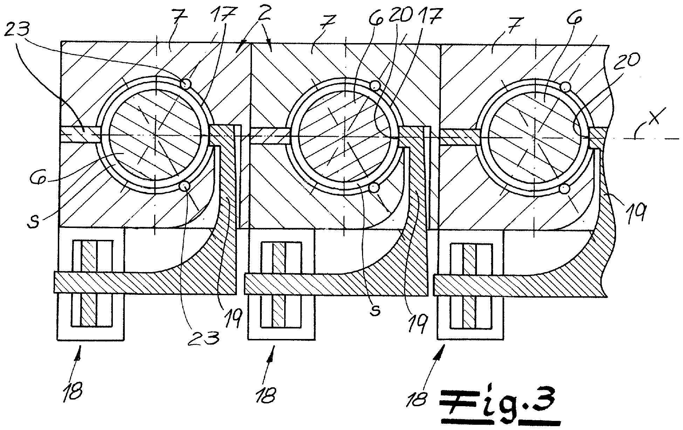

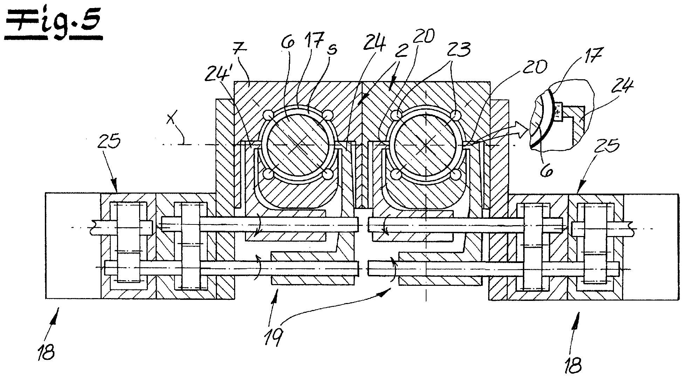

- Fig. 3 bis 11: Schnittdarstellungen von Ausgestaltungen des Mehrfachextrusionskopfes, wobei Fig. 5 den in Fig. 2 dargestellten Mehrfachextrusionskopf in der Schnittebene II - II der Fig. 2 zeigt,

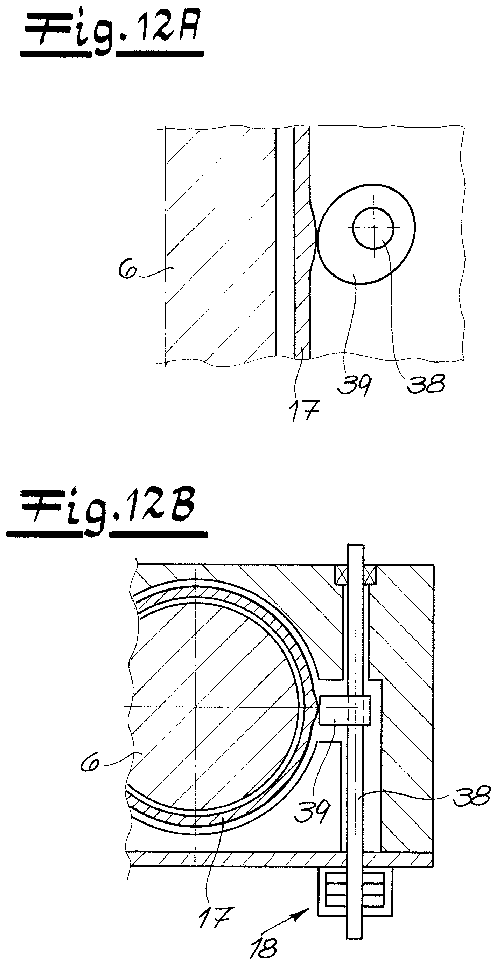

- Fig. 12A, 12B: eine Exzenteranordnung zur Verstellung und/oder Deformation einer elastischen Hülse eines Extrusionswerkzeuges,

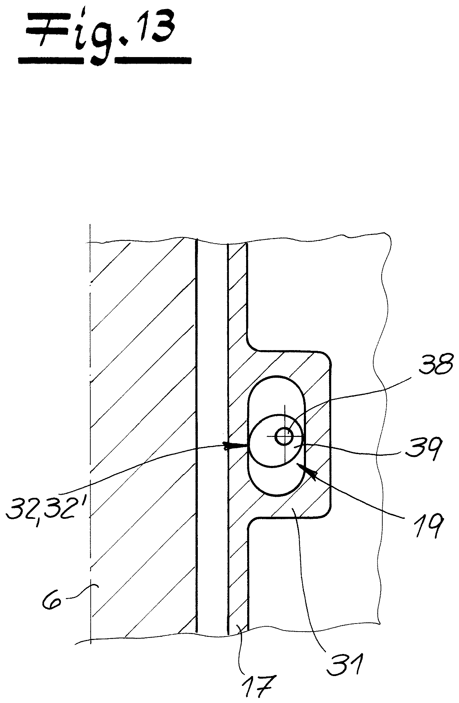

- Fig. 13: eine weitere Ausgestaltung der in Fig. 12A/12B dargestellten Exzenteranordnung,

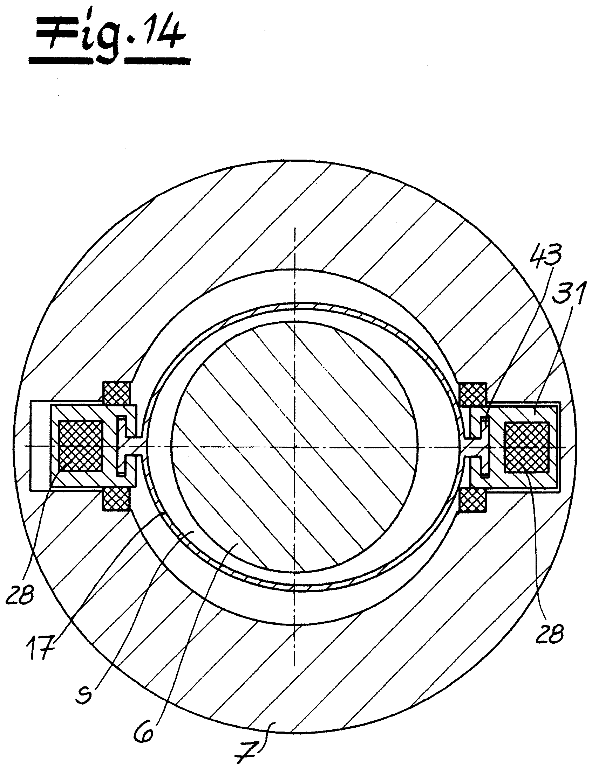

- Fig. 14: eine Schieberanordnung zur Verstellung und/oder Deformation einer elastischen Hülse eines Extrusionswerkzeuges,

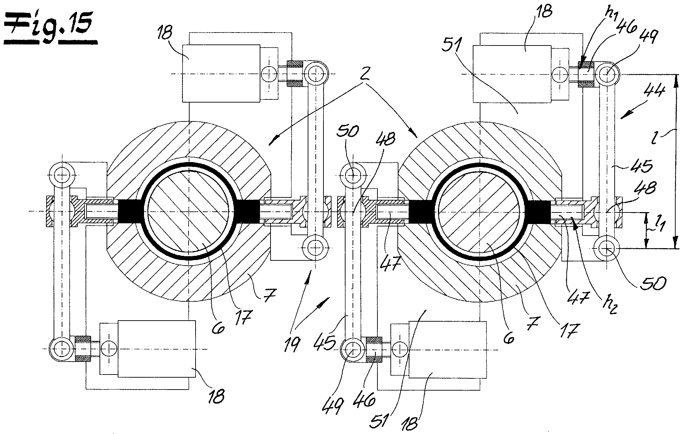

- Fig. 15: eine vorteilhafte Ausgestaltung des Mehrfachextrusionskopfes in einer Schnittdarstellung.

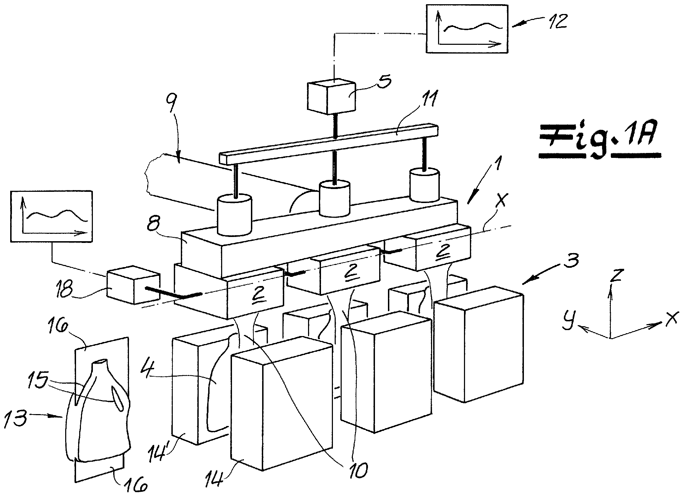

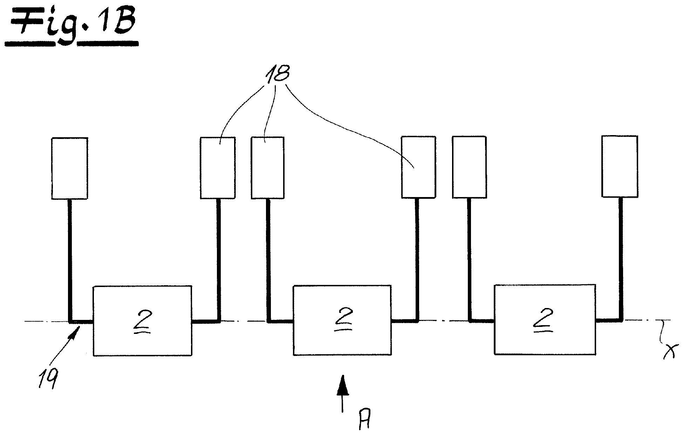

Die in Fig. 1A schematisch dargestellte Blasformanlage umfasst einen Mehrfachextrusionskopf 1 mit mehreren nebeneinander angeordneten Extrusionswerkzeugen 2, eine Schließeinheit 3, die eine der Anzahl der Extrusionswerkzeuge entsprechende Anzahl von Blasformkavitäten 4 aufweist, sowie einen Stellantrieb 5 zur gleichzeitigen Verstellung eines Düsenspaltes in den Extrusionswerkzeugen 2. Die Extrusionswerkzeuge 2 sind in einer Reihe nebeneinander angeordnet und erstrecken sich parallel zu einer Formtrennebene x, z der Blasformkavitäten 4. Die Extrusionswerkzeuge 2 weisen jeweils einen Dorn 6 sowie einen den Dorn 6 mit einem Düsenspalt s umgebenden Düsenkörper 7 auf. Die Extrusionswerkzeuge 2 können voneinander unabhängige Gehäuse aufweisen oder in einem Gehäuse integriert sein. Die Extrusionswerkzeuge 2 sind über einen Schmelzeverteiler 8 mit einer Plastifiziereinheit 9, z. B. einem Extruder, verbunden. Die Kunststoffschmelze tritt in Form schlauchförmiger Vorformlinge 10 aus den nebeneinander angeordneten Extrusionswerkzeugen 2 aus. Dabei wird die Düsenspaltbreite s der Extrusionswerkzeuge 2 während der Extrusion der Vorformlinge 10 durch Stellbewegungen der Dorne 6 und/oder durch eine Stellbewegung der Düsenkörper 7 verändert. Die Steuerung dieser Bewegung erfolgt beispielsweise mittels eines Stellantriebes 5, der über eine Traverse 11 mit den einzelnen Extrusionswerkzeugen 2 verbunden ist und programmgesteuerte Stellbewegungen 3 nach Vorgabe einer schematisch dargestellten Profilkurve 12 ausführt. Anstelle eines Stellantriebes 5, der über eine Traverse 11 mit den einzelnen Extrusionswerkzeugen 2 verbunden ist, können den Extrusionswerkzeugen 2 auch einzelne Stellantriebe zugeordnet sein, die programmgesteuerte Stellbewegungen ausführen.

Die Vorformlinge 10 werden den Blasformkavitäten 4 der Schließeinheit 3 zugeführt und dort nach dem Schließen der Blasformkavitäten 4 mittels Blasluft zu Kunststoffhohlkörpern 13 aufgeweitet. Im Ausführungsbeispiel werden Kunststoffflaschen geformt, die in der Formtrennebene x, z der Blasformkavitäten 4 ein asymmetrisches Design aufweisen und in einer dazu senkrechten Schnittebene y, z ein im wesentlichen symmetrisches Profil besitzen.

Die entlang der Formtrennebene x, z getrennten Blasformhälften 14, 14' sind in der Regel auf Werkzeugaufspannplatten einer Schließeinheit 3 aufgespannt. Die Schließeinheit 3 übernimmt beim Extrusionsblasformen das Schließen der beiden Blasformhälften 14 14' gegen die Vorformlinge. Während dieser Formschließbewegung werden die Vorformlinge 10 durch das Abquetschen von überstehendem Vorformlingmaterial verschlossen. In den Abquetschzonen entstehen durch das Verschweißen des Kunststoffschlauches Schweißnähte 15, die als Quetschnähte bezeichnet werden. Die abgequetschten Kunststoffreste werden als Butzen 16 bezeichnet und als Abfallstücke von dem Kunststoffhohlkörper 13 entfernt. Während oder nach dem Schließen der Blasformkavitäten werden die Vorformlinge 10 mit Druckluft aufgeblasen und gegen die gekühlte Wandungskavität gepresst. Je nach Extrusions- und Blasverfahren bleibt die Schließeinheit 3 unter dem Mehrfachextrusionskopf 1 stehen oder wird aus dem Extrusionsbereich der Vorformlinge 10 in eine sogenannte Blasposition verfahren. Es entspricht auch dem Stand der Technik, dass dem Mehrfachextrusionskopf 1 mehrere Schließeinheiten 3 zugeordnet sind.

Die Extrusionswerkzeuge 2 sind jeweils mit mindestens einer elastisch deformierbaren Hülse 17 ausgestattet, die einen Wandabschnitt des Düsenspaltes s bildet und in dem Düsenkörper 7 angeordnet ist (Fig. 2). Die Hülse 17 ist auf einer horizontalen Fläche 21 eines Trägers 22 radial beweglich abgestützt und an ihrem oberen Ende im Extrusionswerkzeug 2 vertikal beweglich geführt. Alternativ kann die Hülse 17 an ihrem oberen Ende auch kippbeweglich im Extrusionswerkzeug 2 gelagert sein. Die Hülsen 17 bestehen im Regelfall aus Metall und sind dünnwandig. Andere Hülsenwerkstoffe, z. B. temperaturbeständige Kunststoffe und Verbundmaterialien, können ebenfalls eingesetzt werden. Bevorzugt sind Hülsen 17, die sowohl durch radiale Druckkräfte als auch durch radiale Zugkräfte verformt werden können. Während der Extrusion der Vorformlinge 10 wird die Querschnittsgeometrie der Hülsen 17 verändert, um das Profil des Düsenspaltes s zu beeinflussen. Zum Zwecke einer radialen elastischen Verformung der Hülsen 17 ist jedem Extrusionswerkzeug 2 des Mehrfachextrusionskopfes 1 zumindest ein programmgesteuerter Einzelantrieb 18 zugeordnet, der mittels eines Übertragungselementes 19 nur auf die elastisch deformierbare Hülse 17 des zugeordneten Extrusionswerkzeuges 2 wirkt.

Die Übertragungselemente 19 wirken auf einen Umfangsabschnitt der elastisch deformierbaren Hülsen 17, der sich bezogen auf die x-Achse der Formtrennebene über einen Winkel von maximal ± 45° erstreckt. Die Kraft wird im Kraftangriffspunkt 20 lokal auf die Hülse 17 übertragen und ist im Kraftangriffspunkt 20 radial zur Mittelachse der Hülse 17 ausgerichtet. Üblicherweise befindet sich der Kraftangriffspunkt 20 zwischen der Hülse 17 und dem Übertragungselement 19 in einem Umfangsabschnitt der Hülse 17, der sich bezogen auf die x-Achse der Formtrennebene über einen Winkel von ± 22,5° erstreckt.

Vorzugsweise wirkt das Übertragungselement 19 an zumindest einem in der Formtrennebene x, z positionierten Kraftangriffspunkt 20 auf den Umfang der Hülse 17. Bei dieser Anordnung wirkt das Übertragungselement 19 in der Hauptdeformationsachse, die in der Formtrennebene x, z liegt, auf die elastisch deformierbare Hülse 17. Die den Übertragungselementen 19 zugeordneten Einzelantriebe 18 sind zur x-Achse der Formtrennebene seitlich versetzt angeordnet. Die Position und Ausrichtung der Einzelantriebe 18 kann unabhängig von dem in Fig. 2 dargestellten Kraftangriffspunkt 20 (zwischen dem Übertragungselement 19 und der Hülse 17) festgelegt werden.

Im Ausführungsbeispiel der Fig. 3 drücken die Übertragungselemente 19 bei einer Stellbewegung jeweils an einer Seite auf eine außenliegende Mantelfläche der Hülsen 17, die an mehreren an ihrem Umfang angeordneten Gegenlagern 23 abgestützt sind. Die Anzahl und Position der Gegenlager 23 beeinflusst den Querschnitt der Hülsen 17, der sich bei der Betätigung der einseitig wirkenden Übertragungselemente 19 durch elastische Verformung einstellt. Im Ausführungsbeispiel sind drei Gegenlager 23 vorgesehen, die in äquidistanten Abständen am Umfang der Hülsen 17 angeordnet sind, wobei eines der Gegenlager um 180° zum Kraftangriffspunkt des Übertragungselementes 19 versetzt positioniert ist und zusammen mit dem Kraftangriffspunkt 20 die Deformationsachse festlegt. Dabei kann die Hülse 17 an das Gegenlager angebunden sein. Die Deformationsachse erstreckt sich im Ausführungsbeispiel parallel zur Formtrennebene x, z der Blasformkavitäten 4. ist das Übertragungselemente 19 mit der flexiblen Hülse 17 verbunden, so können auch ziehende Deformationen ausgeführt werden. Die Einzelantriebe 18 zur Verstellung der Übertragungselemente 19 können einen pneumatischen, hydraulischen oder elektromechanischen Antriebskopf aufweisen.

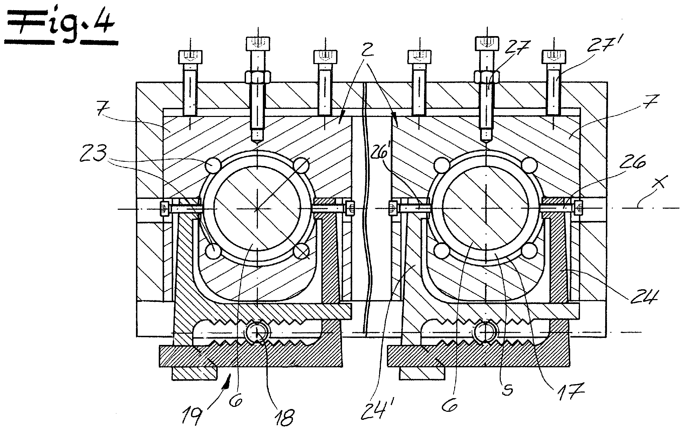

Im Ausführungsbeispiel der Fig. 4 weist das einem Einzelantrieb 18 zugeordnete Übertragungselement 19 kinematisch gekoppelte Elemente 24, 24' auf, die paarweise auf die Hülse 17 wirken und bei einer Stellbewegung eines nur durch ein Ritzel schematisch angedeuteten Einzelantriebs 18 beidseits Druck- oder Zugkräfte auf die zugeordnete Hülse 17 ausüben.

Im Ausführungsbeispiel der Fig. 5 weisen die Einzelantriebe 18 jeweils einen elektromechanischen Antriebskopf 25 zur Erzeugung einer Linearbewegung eines Elementes 24 auf, welches mit einem linear beweglichen Stellelement 24' zusammenwirkt. Der Antriebskopf umfasst einen Getriebemotor mit zwei gegensinnig angetriebenen Abtriebswellen. Die Elemente 24, 24' führen kinematisch gekoppelte gegenläufige Bewegungen aus. Zusätzlich können die Hülsen 17 an Gegenlagern 23 abgestützt sein. Vorzugsweise sind vier Gegenlager 23 vorgesehen, die unter einem Winkel α von ± 45° zur Deformationsachse ausgerichtet sind. Die Deformationsachse ist durch die Kraftangriffspunkte 20 der kinematisch gekoppelten Elemente 24 festgelegt und erstreckt sich parallel zur Formtrennebene x, z der Blasformkavitäten 4. Die Elemente 24, 24' des Übertragungselementes 19 sind durch ein Gelenk mit der Hülse 17 verbunden, so dass Druckkräfte und Zugkräfte auf die Hülse übertragen werden können.

An den Extrusionswerkzeugen 2 können unabhängige Grundeinstellungen vorgenommen werden, wobei im Zuge dieser Einstellungen die Hülsen 17 der Extrusionswerkzeuge 2 vordeformiert werden und/oder die Position der Hülsen 17 korrigiert wird und/oder der Düsenkörper 7 und der Dorn 6 der Extrusionswerkzeuge 2 relativ zueinander verstellt werden. Zur Veränderung der Grundeinstellung der Extrusionswerkzeuge 2 sind zugeordnete und unabhängig voneinander betätigbare Stellelemente vorgesehen.

Im Ausführungsbeispiel der Fig. 4 sind den kinematisch gekoppelten Elementen 24, 24' Stellelemente 26, 26' angeordnet, die radial auf die Wandfläche der zugeordneten Hülse 17 wirken. Durch Betätigung dieser Stellelemente 26, 26' kann jeweils die dem Stellelement zugeordnete Hülse 17 deformiert oder hinsichtlich ihrer Lage korrigiert werden. Des Weiteren sind Stellelemente 27, 27' vorgesehen, die auf den Düsenkörper 7 der Extrusionswerkzeuge 2 wirken und eine Positionskorrektur des Düsenkörpers 7 relativ zum Dorn 6 des Extrusionswerkzeuges ermöglichen. Die Veränderung einer Grundeinstellung an den Extrusionswerkzeugen 2 ist vorteilhaft, da bei der Herstellung von kleinen blasgeformten Hohlkörpern bereits ein kleiner Unterschied im radialen Düsenspaltverlauf von einem Extrusionswerkzeug zum anderen Extrusionswerkzeug große Wanddickenunterschiede der Vorformlinge 10 zur Folge hat. Daher ist es vorteilhaft, dass zum Ausgleich von Fertigungstoleranzen jedes auf die Hülse 17 wirkende Übertragungselement 19 Ausgleichselemente aufweist. Ferner kann das rheologische Verhalten der Kunststoffschmelze sowie Fertigungstoleranzen in den Fließkanälen der Extrusionswerkzeuge 2 und Temperaturunterschiede dazu führen, dass der Schlauchlauf der aus den Extrusionswerkzeugen 2 austretenden Vorformlinge 10 sowie die radiale Wanddickenverteilung der aus den in verschiedenen Extrusionswerkzeugen 2 austretenden Vorformlinge 10 voneinander abweichen. Zur Korrektur dieser Effekte kann es zweckmäßig sein, wenn an jeder Hülse 17 durch die beschriebenen Stellelemente 26, 26' die Grundform der Hülsen und deren Position korrigiert werden kann. Entsprechendes gilt für eine Korrektur der Lage zwischen Düsenkörper 7 und Dorn 6 unter Verwendung der Stellelemente 27, 27'.

Im Ausführungsbeispiel der Fig. 5 weist das einem Einzelantrieb 18 zugeordnete Übertragungselement 19 kinematisch gekoppelte Elemente 24, 24' auf, die paarweise auf die Hülse 17 wirken und bei einer Stellbewegung des Einzelantriebes 18 eine gegenläufige Zangenbewegung ausführen. Gemäß der Darstellung in Fig. 5 ist der Antrieb 18 als Spindelantrieb ausgebildet und weist einen Motor mit einem Untersetzungsgetriebe und gegenläufig angetriebene Gewindespindeln auf. Die kinematisch gekoppelten Elemente 24, 24' der Übertragungselemente sind durch Spindelmuttern an die Gewindespindeln angeschlossen. Jedem Extrusionswerkzeug ist ein programmgesteuerter Einzelantrieb 18 zugeordnet, der mittels kinematisch gekoppelter Elemente 24, 24' eines Übertragungselementes 19 nur auf die elastisch deformierbare Hülse 17 des zugeordneten Extrusionswerkzeuges 2 wirkt.

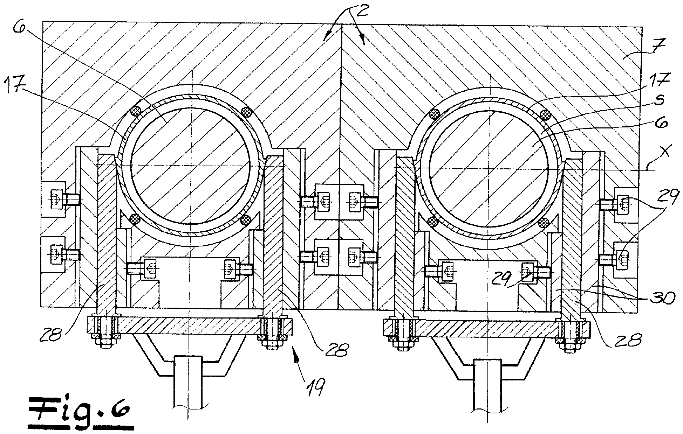

Die Übertragungselemente 19 können auch als Schieber 28 ausgebildet sein, wobei die Schieber 28 jeweils eine Steuerfläche aufweisen, die mit einer Gegenfläche an der zugeordneten Hülse 17 zusammenwirkt. Eine solche konstruktive Lösung ist in Fig. 6 dargestellt. Die Steuerflächen bestehen aus einem angefasten Ende des Schiebers 28. Die Schieber 28 üben bei einer Stellbewegung beidseits Druck auf die zugeordnete Hülse 17 aus und verformen diese elliptisch. Die Schieber 28 sind zwischen Druckplatten 30 geführt, deren Position durch Stellmittel 29 einstellbar ist. Durch Einstellen der Druckplatten 30 können an den Extrusionswerkzeugen 2 individuelle Grundeinstellungen vorgenommen werden. Im Rahmen dieser Grundeinstellung kann die Position der Hülsen 17 individuell korrigiert werden. Ferner ist eine individuelle Vordeformation der Hülsen 17 möglich.

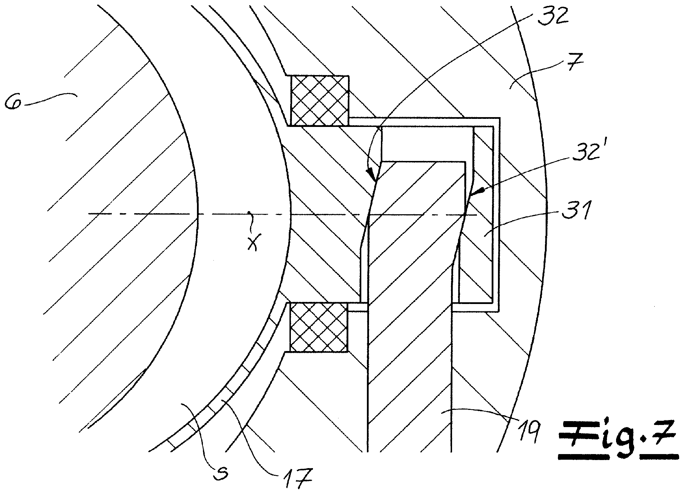

Der Anschlussbereich zwischen dem als Schieber 28 ausgebildeten Übertragungselement 19 und einer Hülse 17 kann so gestaltet werden, dass bei einer Stellbewegung der Übertragungselemente 19 Zugkräfte auf die Mantelfläche der Hülsen 17 übertragen werden und die Hülsen 17 durch beidseitig angreifende Zugkräfte elliptisch verformt werden. In diesem Fall wirken die Schieber 28 auf Steuerflächen, die mit den Hülsen 17 verbunden sind. Der Anschlussbereich zwischen den Übertragungselementen 17 und den Hülsen 17 kann ferner auch so ausgebildet werden, dass bei einer Stellbewegung der Übertragungselemente 19 in Abhängigkeit des Stellweges eine Zugkraft oder eine Druckkraft auf die Hülsen 17 übertragen wird. Ein entsprechendes Anschlusselement 31 ist in Fig. 7 dargestellt. Das Übertragungselement 19 greift in das Anschlusselement 31 ein, das mit dem Mantel der Hülse 17 verbunden ist und Steuerflächen 32 zur Übertragung radialer Druckkräfte und Steuerflächen 32' zur Übertragung radialer Zugkräfte aufweist.

In den in Fig. 6 und 7 dargestellten Ausführungsbeispielen sind die Schieber 28 horizontal ausgerichtet. Es versteht sich, dass auch vertikal ausgerichtete Schieber eingesetzt werden können, die durch vertikale Stellbewegungen auf Steuerflächen am Umfang der Hülse wirken, wobei Druckkräfte und/oder Zugkräfte in der beschriebenen Weise übertragen werden können. Eine Anordnung mit zwei vertikal ausgerichteten Schiebern 28 ist in Fig. 14 dargestellt. Durch aufeinander abgestimmte Bewegungen der beiden Schieber 28 kann die Hülse 17 in Richtung der Deformationsachse x verschwenkt oder radial verschoben werden, wobei sich die in Fig. 14 beispielhaft dargestellte Düsenspaltgeometrie zwischen Dorn 6 und Düsenkörper 7 einstellen lässt. Die als Schieber 28 ausgebildeten Übertragungselemente greifen in Anschlusselemente 31 ein, die durch Formschlusselemente 43 lösbar mit der Hülse 17 verbunden sind. Die elastisch deformierbare Hülse 17 ist austauschbar, ohne dass die Anschlusselemente 31 und die zugeordneten Übertragungselemente ausgebaut werden müssen.

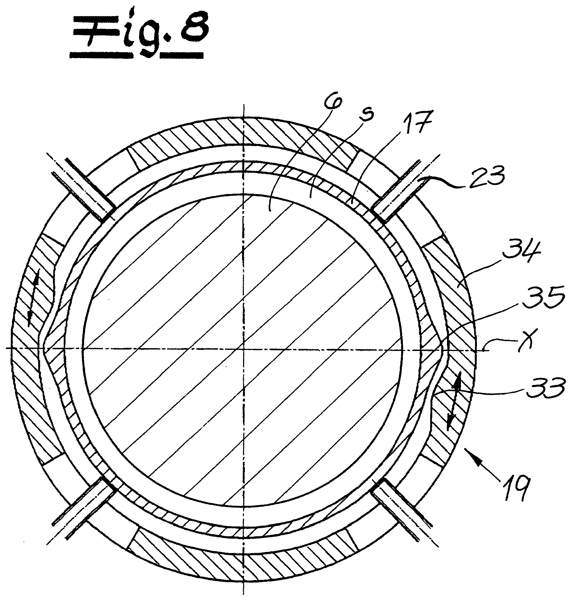

Die Fig. 8 zeigt ein Übertragungselement 19, welches als Drehring 34 ausgebildet ist. Der Drehring weist an einer zur Hülse 17 benachbarten Umfangsfläche mindestens eine Steuerfläche 33 auf, die bei einer Drehbewegung des Drehringes 34 mit einer Gegenfläche 35 an der Hülse 17 zusammenwirkt und Druck auf die zugeordnete Hülse 17 ausübt. Jeder der parallel geschalteten Extrusionswerkzeuge 2 kann mit einem Drehring 34 ausgestattet werden, wobei jedem Drehring 34 ein programmgesteuerter Einzelantrieb 18 zugeordnet ist. Zusätzlich können Gegenlager 23 zur Abstützung der Hülse 17 vorgesehen sein.

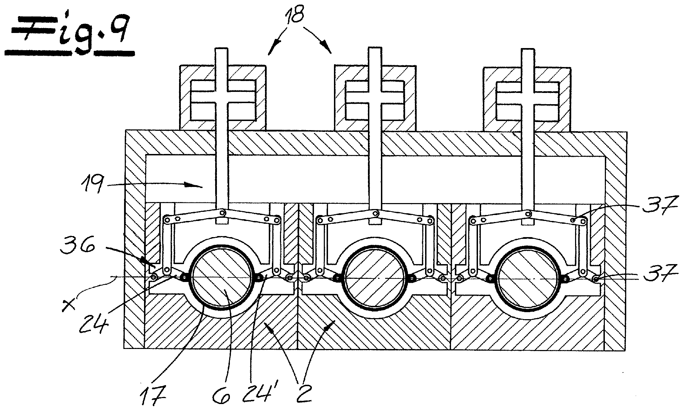

Im Ausführungsbeispiel der Fig. 9 weisen die Übertragungselemente 19 kinematisch gekoppelte Elemente 24, 24' auf, die paarweise auf die dem Übertragungselement 19 zugeordnete Hülse 17 wirken und bei einer Betätigung des dem Extrusionswerkzeug zugeordneten Einzelantriebs 18 beidseits Druck- oder Zugkräfte auf die Hülse 17 ausüben. Die Elemente 24, 24' sind gelenkig an der Hülse 17 befestigt und über eine Kniehebelanordnung 36 an den Einzelantrieb 18 angeschlossen. Bei der im Ausführungsbeispiel dargestellten Kniehebelanordnung 36 ergibt sich bezüglich des Stellwegs eine zweifache Untersetzung dadurch, dass die Hebel der Kniehebelanordnung 36 an ortsfesten Drehpunkten 37 abgestützt sind. Gleichzeitig ergibt sich entsprechend unmittelbar an den Übertragungselementen 19 eine Erhöhung der Stellkraft.

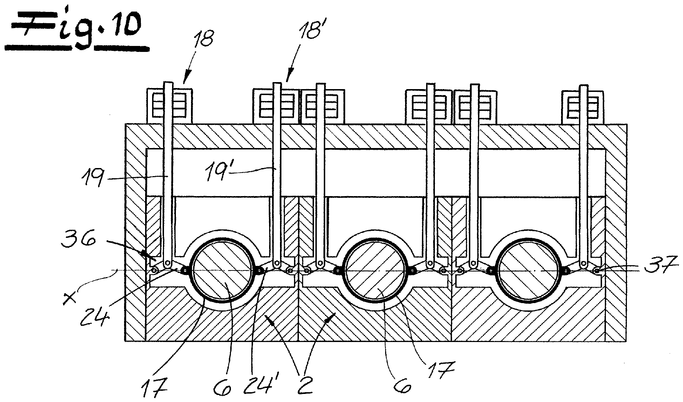

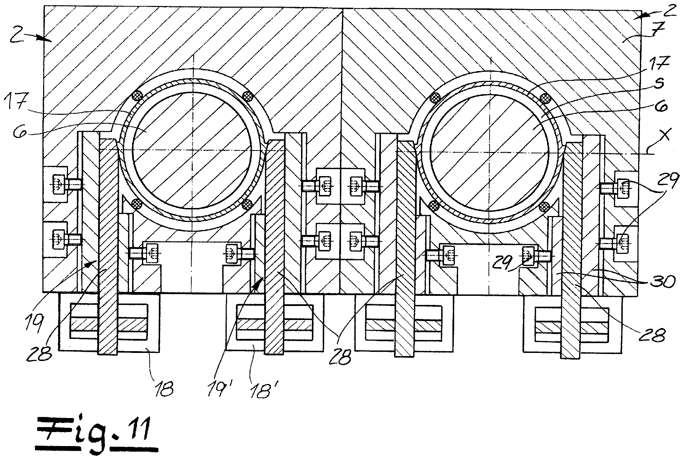

In den Ausführungsbeispielen der Fig. 10, 11, 12 und 15 sind jedem Extrusionswerkzeug 2 des Mehrfachextrusionskopfes 1 zwei programmgesteuerte Einzelantriebe 18, 18' zugeordnet, die jeweils mittels eines Übertragungselementes 19, 19' nur auf die elastisch deformierbare Hülse 17 des zugeordneten Extrusionskopfes wirken und Zugkräfte oder Druckkräfte auf eine Mantelfläche der Hülse 17 ausüben. Durch programmgesteuerte Stellbewegungen der beiden Einzelantriebe 18, 18' kann die Hülse 17 deformiert, verschwenkt oder radial verschoben werden. Das Übertragungselement 18, 18' kann beispielsweise als Kniehebelanordnung entsprechend der Darstellung in Fig. 10 oder als Schieber entsprechend Fig. 11 oder als Exzenteranordnung mit einer drehbar gelagerten Exzenterwelle 38 (Fig. 12A, 12B) ausgebildet sein, wobei die Exzenterwelle 38 bzw. der Schieber 28 eine Steuerfläche aufweist, die am Kraftangriffspunkt 20 mit einer Gegenfläche am Umfang der Hülse 17 zusammenwirkt.

Die Exzenteranordnung ist in Fig. 12A ausschnittweise in einer Seitenansicht und in Fig. 12B in einer Draufsicht dargestellt. Die Exzenteranordnung umfasst eine von einem Einzelantrieb rotierend antreibbare Exzenterwelle 38, der ein Exzenterelement 39 angeordnet ist. Das Exzenterelement 39 weist eine Steuerfläche auf, die am Umfang der Hülse 17 wirksam ist. Durch eine Drehverstellung der Exzenterwelle 38 kann auf die Hülse 17 eine Druckkraft zur Deformation und/oder Verstellung der Hülse ausgeübt werden.

Gemäß einer in Fig. 13 dargestellten Ausführungsvarianten der Exzenteranordnung greift das in Form einer Exzenterwelle ausgebildete Übertragungselement 19 in ein Anschlusselement 31, welches mit der Hülse 17 verbunden ist. Das Anschlusselement und das Exzenterelement 39 weisen Steuerflächen 32, 32' zur Übertragung radialer Druck- oder Zugkräfte auf. Das Anschlusselement kann - wie in Fig. 13 dargestellt - als Auge ausgebildet sein.

In den Ausführungsbeispielen der Fig. 10 bis 13 sind die Übertragungselemente horizontal ausgerichtet. Stattdessen ist auch eine vertikale Ausrichtung der Übertragungselemente möglich.

Gemäß einer in Fig. 15 dargestellten vorteilhaften Ausgestaltung der erfindungsgemäßen Vorrichtung weisen die Übertragungselemente 19 jeweils ein Gestänge 44 auf, welches einen Stellhub h₁ des mit dem Gestänge 44 verbundenen Einzelantriebs 18 in einen an der elastisch deformierbaren Hülse 17 wirksamen kleineren Stellweg h₂ untersetzt. Das Gestänge 44 erlaubt durch die gleichzeitig wirksame Kraftübersetzung, dass leistungsschwächere und kostengünstige Stellantriebe als Einzelantriebe 18 eingesetzt werden können. Als Stellantriebe eignen sich beispielsweise einfache Standardschrittmotoren mit Spindelantrieb. Das Gestänge 44 weist im Ausführungsbeispiel der Fig. 15 einen Hebel 45 auf, der an einem Ende in einem Lager 50 schwenkbeweglich gelagert ist und an seinem anderen Ende gelenkig mit einem Stellglied 46 des Einzelantriebs 18 verbunden ist. Zwischen dem Hebel 45 und der elastisch deformierbaren Hülse 17 ist ein Übertragungselement 47 zur Bewegungsübertragung vorgesehen, welches an einer Kupplungsstelle 48 zwischen der Kraftangriffsstelle 49 des auf den Hebel 45 wirkenden Einzelantriebs 18 und dem endseitigen Lager 50 an den Hebel 45 angeschlossen ist. Der Anschluss an der Kupplungsstelle 48 kann beispielsweise mittels eines Kugelgelenkes erfolgen. Durch das Längenverhältnis I₁/I des Hebelabschnittes I₁ zwischen dem Lager 50 und der Kupplungsstelle 48 einerseits und der Gesamtlänge I des Hebels 45 zwischen dem Lager 50 und der Kraftangriffsstelle 49 des auf den Hebel 45 wirkenden Einzelantriebs 18 andererseits kann das Untersetzungsverhältnis variiert werden. Vorzugsweise wird der Abstand zwischen der Kupplungsstelle 48 und dem Lager 50 möglichst klein und der Abstand zwischen der Kupplungsstelle 48 und der Kraftangriffsstelle 49, an der der Einzelantrieb 18 auf den Hebel 45 wirkt, möglichst groß gewählt. Im Ausführungsbeispiel ist das Lager 50 für die schwenkbewegliche Lagerung des Hebels 45 auf **einem Träger 51 angeordnet, der** mit dem Extrusionswerkzeug 2 verbunden ist. Anderweitige Konstruktionen sollen nicht ausgeschlossen sein. Ein Vorteil der in Fig. 15 dargestellten Ausführung der Erfindung ist die kompakte Bauform. Bei beengten Einbauverhältnissen lässt sich ein großes Untersetzungsverhältnis zwischen dem Stellhub h₁ des Einzelantriebes 19 und dem auf die deformierbare Hülse 17 wirkende Stellweg h₂ realisieren, welches beispielsweise 10:1 bis 100:1 betragen kann. Im Rahmen der Erfindung liegt es auch, dass das gewünschte Untersetzungsverhältnis mittels einer zwei- oder mehrstufigen Untersetzung verwirklicht wird.

Die erfindungsgemäße Vorrichtung ermöglicht eine dynamische Beeinflussung des radialen Düsenspaltverlaufes in parallel nebeneinander angeordneten Extrusionswerkzeugen 2 eines Mehrfachextrusionskopfes 1, die mit einem kleinen Abstand zueinander angeordnet sein können. Die erfindungsgemäße Vorrichtung und das beanspruchte Verfahren lassen sich auch unter beengten Platzverhältnissen eines Mehrfachextrusionskopfes 1 realisieren und sind für kleine Düsendurchmesser, insbesondere für Durchmesser von deutlich kleiner als 60 mm, geeignet. Dabei können die beschriebenen Verfahren und Vorrichtungen in beliebiger Weise kombiniert werden. Mittels einer Wanddickensteuerung werden die Hülsen 17 der Extrusionswerkzeuge 2 zeitgleich deformiert, wobei auch eine radiale Verschiebung oder ein radiales Verschwenken der Hülsen möglich ist. Die Extrusionswerkzeuge 2 können separate Düsenkörper 7 aufweisen, oder aber auch eine als Einheit horizontal verstellbare oder kippbewegliche Düsenkörperbaugruppe bilden. Vorzugsweise sind die Düsenkörper 7 horizontal verstellbar oder kippbeweglich angeordnet. Es ist zumindest ein Antrieb vorgesehen um die Düsenkörper 7 relativ zu den Dornen 6 der Extrusionswerkzeuge 2 zu verstellen. Die Wirkungsrichtung des auf mindestens einen Düsenkörper 7 wirkenden Antriebs kann mit der durch die Kraftangriffspunkte 20 der Übertragungselemente 19 vorgegebenen Deformationsachse fluchten oder sich parallel zu einer deformationsneutralen Achse der Hülsen 17 erstrecken. Zweckmäßig ist es auch, wenn den Extrusionswerkzeugen individuell zugeordnete und unabhängig voneinander betätigbare Stellelemente zur Veränderung einer Grundeinstellung der Düsenspaltgeometrie zugeordnet sind. Zweckmäßig sind daher an den Übertragungselementen Stellelemente angeordnet, wobei durch Betätigung dieser Stellelemente die Grundeinstellung des Extrusionswerkzeuges durch eine Vordeformation und/oder eine Positionskorrektur der Hülse veränderbar ist.

## Patentansprüche

1. Verfahren zur Herstellung blasgeformter Kunststoffhohlkörper, bei dem schlauchförmige Vorformlinge (10) aus zumindest zwei nebeneinander angeordneten Extrusionswerkzeugen (2) eines Mehrfachextrusionskopfes (1) zeitgleich extrudiert und Blasformkavitäten (4) einer Schließeinheit (3) zugeführt werden, in der die Vorformlinge (10) nach dem Schließen der Blasformkavitäten (4) mittels Blasluft zu Kunststoffhohlkörpern (13) aufgeweitet werden,
wobei die Vorformlinge (10) aus einem von einem Dorn (6) und einem Düsenkörper (3) begrenzten Düsenspalt (s) der Extrusionswerkzeuge (2) austreten und die Düsenspaltenbreite (s) der Extrusionswerkzeuge (2) während der Extrusion durch Stellbewegungen der Dorne (6) und/oder der Düsenkörper (7) verändert wird,
**dadurch gekennzeichnet, dass**
die Schmelzeverteilung der aus den Extrusionswerkzeugen (2) austretenden Vorformlinge (10) in Umfangsrichtung jeweils durch Deformation einer den Düsenspalt (s) begrenzenden elastischen Hülse (17) während der Extrusion verändert wird,
wobei jedem Extrusionswerkzeug (2) zumindest ein programmgesteuerter Einzelantrieb (18) zugeordnet wird, der mittels eines Übertragungselementes (19) nur auf die elastisch deformierbare Hülse (17) des zugeordneten Extrusionswerkzeuges (2) wirkt, und
wobei die Übertragungselemente (19) jeweils in einen Bereich zwischen zwei benachbarten Extrusionswerkzeugen (2) eingreifen und dort am Umfang der elastisch verformbaren Hülsen (17) wirksam sind.

2. Verfahren nach Anspruch 1, **dadurch gekennzeichnet, dass** die Übertragungselemente (19) jeweils an zumindest einem Kraftangriffspunkt (20) auf den Umfang der Hülsen (17) wirken, wobei der Kraftangriffspunkt (20) sich in einem Umfangsabschnitt der Hülse (17) befindet, der sich bezogen auf die Formtrennebene (x, z) der Blasformkavitäten (4) über einen Winkel von maximal ± 45° erstreckt.

3. Verfahren nach Anspruch 1, **dadurch gekennzeichnet, dass** die Übertragungselemente (19) an Kraftangriffspunkten (20) auf den Umfang der elastisch deformierbaren Hülsen (17) wirken, die in der Formtrennebene (x, z) der Blasformkavitäten (4) liegen.

4. Verfahren nach einem der Ansprüche 1 bis 3, **dadurch gekennzeichnet, dass** die Übertragungselemente (19) bei einer Stellbewegung ihres zugeordneten Antriebs (18) auf eine außenliegende Mantelfläche der Hülsen (17) wirken und dass die Hülsen (17) jeweils an mindestens einem umfangsseitig angeordneten Gegenlager (23) abgestützt und/oder angebunden werden.

5. Verfahren nach einem der Ansprüche 1 bis 4, **dadurch gekennzeichnet, dass** das einem Einzelantrieb (18) zugeordnete Übertragungselement (19) kinematisch gekoppelte Elemente (24, 24') aufweist, die paarweise auf die Hülse (17) wirken und bei einer Stellbewegung des Einzelantriebs (18) beidseits radiale Druckkräfte oder Zugkräfte auf die zugeordnete Hülse (17) ausüben.

6. Verfahren nach einem der Ansprüche 1 bis 4, **dadurch gekennzeichnet, dass** die Übertragungselemente (19) radiale Zugkräfte auf die Mantelfläche der Hülsen (17) übertragen.

7. Verfahren nach einem der Ansprüche 1 bis 3, **dadurch gekennzeichnet, dass** den Extrusionswerkzeugen (2) jeweils zwei programmgesteuerte Einzelantriebe (18) zugeordnet werden, die mittels zugeordneter Übertragungselemente (19) nur auf die elastisch deformierbare Hülse (17) des zugeordneten Extrusionswerkzeuges (2) wirken und Zugkräfte und/oder Druckkräfte auf eine Mantelfläche der Hülse (17) ausüben, und dass durch programmgesteuerte Stellbewegungen der beiden Einzelantriebe (18) die Hülse (17) deformiert, verschwenkt oder radial verschoben wird.

8. Verfahren nach Anspruch 7, **dadurch gekennzeichnet, dass** die Hülse (17) durch gegenläufige, im Betrag gleich große Verstellwege der auf sie wirkenden Übertragungselemente (19) deformiert wird oder durch im Betrag unterschiedliche Verstellwege deformiert sowie in Richtung der Deformationsachse verschwenkt oder radial verschoben wird oder dass die Hülse durch gleich gerichtete, gleichgroße Verstellbewegungen der Übertragungselemente (19) ohne Deformation radial verschwenkt oder verschoben wird.

9. Verfahren nach einem der Ansprüche 1 bis 8, **dadurch gekennzeichnet, dass** an den Extrusionswerkzeugen (2) Grundeinstellungen vorgenommen werden, wobei im Zuge dieser Einstellungen die Hülsen (17) vordeformiert werden und/oder die Position der Hülsen (17) korrigiert wird und/oder der Düsenkörper (7) und der Dorn (6) relativ zueinander verstellt werden.

10. Mehrfachextrusionskopf zur Durchführung des Verfahrens nach einem der Ansprüche 1 bis 9, der zumindest zwei nebeneinander angeordnete Extrusionswerkzeuge (2) mit einem von einem Dorn (6) und einem Düsenkörper (7) begrenzten Düsenspalt (s) aufweist, **dadurch gekennzeichnet, dass** die Extrusionswerkzeuge (2) jeweils mit mindestens einer elastisch deformierbaren Hülse (17) ausgestattet sind, die einen Wandabschnitt des Düsenspaltes (s) bildet und im Düsenkörper (7) des Extrusionswerkzeuges (2) angeordnet ist,
wobei jedem Extrusionswerkzeug (2) zumindest ein programmgesteuerter Einzelantrieb (18) zugeordnet ist, der mittels eines Übertragungselementes (19) nur auf die elastisch deformierbare Hülse (17) des zugeordneten Extrusionswerkzeuges (2) wirkt, und
wobei die Übertragungselemente (19) jeweils in den Bereich zwischen benachbarten Extrusionswerkzeugen (2) eingreifen und dort an einem Umfangsabschnitt der dem Einzelantrieb (18) zugeordneten elastisch deformierbaren Hülse (17) wirksam sind.

11. Mehrfachextrusionskopf nach Anspruch 10, **dadurch gekennzeichnet, dass** die Übertragungselemente (19) auf eine außenliegende Mantelfläche der Hülsen (17) wirken.

12. Mehrfachextrusionskopf nach Anspruch 10 oder 11, **dadurch gekennzeichnet, dass** die Übertragungselemente (19) bei einer Stellbewegung ihres zugeordneten Einzelantriebs (18) auf eine außenliegende Mantelfläche der Hülsen (17) wirken und dass die Hülsen (17) jeweils an mindestens einem umfangsseitig angeordneten Gegenlager (23) abgestützt und/oder angebunden sind.

13. Mehrfachextrusionskopf nach einem der Ansprüche 10 bis 12, **dadurch gekennzeichnet, dass** das einem Einzelantrieb (18) zugeordnete Übertragungselement (19) kinematisch gekoppelte Elemente (24, 24') aufweist, die paarweise auf die Hülse (17) wirken und bei einer Stellbewegung des Einzelantriebs (18) beidseits Druck- oder Zugkräfte auf die zugeordnete Hülse (17) ausüben.

14. Mehrfachextrusionskopf nach Anspruch 13, **dadurch gekennzeichnet, dass** die Elemente (24, 24') des Übertragungselementes (19) bei einer Stellbewegung des Einzelantriebes (18) eine gegenläufige Zangenbewegung ausführen.

15. Mehrfachextrusionskopf nach Anspruch 13 oder 14, **dadurch gekennzeichnet, dass** die Elemente (24, 24') gelenkig an der Hülse (17) befestigt und über eine Kniehebelanordnung (36) an den Einzelantrieb (18) angeschlossen sind.

16. Mehrfachextrusionskopf nach einem der Ansprüche 10 bis 14, **dadurch gekennzeichnet, dass** die Übertragungselemente (19) als Schieber (28) ausgebildet sind, wobei die Schieber (28) jeweils eine Steuerfläche aufweisen, die mit einer Gegenfläche an der zugeordneten Hülse (17) zusammenwirkt.

17. Mehrfachextrusionskopf nach einem der Ansprüche 10 bis 14, **dadurch gekennzeichnet, dass** die Übertragungselemente (19) als Exzenteranordnung ausgebildet sind, die jeweils mindestens eine drehbar gelagerte Exzenterwelle (38) aufweisen.

18. Mehrfachextrusionskopf nach Anspruch 16 oder 17, **dadurch gekennzeichnet, dass** die Übertragungselemente (19) auf Steuerflächen (32, 32') wirken, die mit den Hülsen (17) verbunden sind und bei einer Stellbewegung der Übertragungselemente (19) Zugkräfte auf die Hülsen (17) übertragen.

19. Mehrfachextrusionskopf nach einem der Ansprüche 16 bis 18, **dadurch gekennzeichnet, dass** die Übertragungselemente (19) auf Steuerflächen (32, 32') wirken, die mit den Hülsen (17) verbunden sind und bei einer Stellbewegung der Übertragungselemente (19) in Abhängigkeit des Stellweges eine Zugkraft oder eine Druckkraft auf die Hülsen (17) übertragen.

20. Mehrfachextrusionskopf nach einem der Ansprüche 16 bis 19, **dadurch gekennzeichnet, dass** die Übertragungselemente (19) in Anschlusselemente (31) eingreifen, die mit den Hülsen (17) verbunden sind und mit den Übertragungselementen zusammenwirkende Steuerflächen (32, 32') zur Übertragung radialer Druck- oder Zugkräfte aufweisen.

21. Mehrfachextrusionskopf nach einem der Ansprüche 10 bis 14, **dadurch gekennzeichnet, dass** die Übertragungselemente (19) als Drehringe (34) ausgebildet sind, die an einer zu den Hülsen (17) benachbarten Umfangsfläche mindestens eine Steuerfläche (33) aufweisen, und dass die Steuerfläche (33) bei einer Drehbewegung des Drehringes (34) mit einer Gegenfläche (35) an der Hülse (17) zusammenwirkt und Druck auf die zugeordnete Hülse (17) ausübt.

22. Mehrfachextrusionskopf nach einem der Ansprüche 10 bis 14, **dadurch gekennzeichnet, dass** die Übertragungselemente (19) eine Gelenkanordnung aufweisen, die auf die Hülse (17) wirkt.

23. Mehrfachextrusionskopf nach Anspruch 10 oder 11, **dadurch gekennzeichnet, dass** jedem Extrusionswerkzeug (2) des Mehrfachextrusionskopfes (1) zwei programmgesteuerte Einzelantriebe (18) zugeordnet sind, die mittels zugeordneter Übertragungselemente (19) nur auf die elastisch deformierbare Hülse (17) des zugeordneten Extrusionswerkzeuges wirken und Zugkräfte oder Druckkräfte auf eine Mantelfläche der Hülse (17) ausüben, und dass durch programmgesteuerte Stellbewegungen der beiden Einzelantriebe die Hülse (17) deformiert, verschwenkt oder radial verschoben werden kann.

24. Mehrfachextrusionskopf nach einem der Ansprüche 10 bis 23, **dadurch gekennzeichnet, dass** die Übertragungselemente (19) ein Gestänge (44) aufweisen, welches einen Stellhub (h₁) des mit dem Gestänge (44) verbundenen Einzelantriebs (18) in einen an der elastisch deformierbaren Hülse (17) wirksamen kleineren Stellweg (h₂) untersetzt.

25. Mehrfachextrusionskopf nach Anspruch 24, **dadurch gekennzeichnet, dass** das Gestänge (44) einen Hebel (45) aufweist, der an einem Ende in einem Lager (50) schwenkbeweglich gelagert ist und an seinem anderen Ende gelenkig mit einem Stellglied (46) des Einzelantriebs (18) verbunden ist, und dass zwischen dem Hebel (45) und der elastisch deformierbaren Hülse (17) ein Übertragungselement (47) zur Bewegungsübertragung vorgesehen ist, welches an einer Kupplungsstelle (48) zwischen der Kraftangriffsstelle (49) des auf den Hebel (45) wirkenden Einzelantriebs (18) und dem endseitigen Lager (50) an den Hebel (45) angeschlossen ist.

26. Mehrfachextrusionskopf nach einem der Ansprüche 10 bis 25, **dadurch gekennzeichnet, dass** die Düsenkörper (7) horizontal verstellbar oder kippbeweglich angeordnet sind und dass zumindest ein Antrieb vorgesehen ist, um die Düsenkörper (7) relativ zu den Dornen (6) der Extrusionswerkzeuge (2) zu verstellen.

27. Mehrfachextrusionskopf nach Anspruch 26, **dadurch gekennzeichnet, dass** die Wirkungsrichtung des auf mindestens einen Düsenkörper (7) wirkenden Antriebs mit der durch die Kraftangriffspunkte (20) der Übertragungselemente (19) vorgegebenen Deformationsachse fluchtet oder sich parallel zu einer deformationsneutralen Achse der Hülsen (17) erstreckt.

28. Mehrfachextrusionskopf nach einem der Ansprüche 10 bis 27, **dadurch gekennzeichnet, dass** die Extrusionswerkzeuge (2) individuell zugeordnete und voneinander unabhängig betätigbare Stellelemente (26, 27) zur Veränderung einer Grundeinstellung der Düsenspaltgeometrie aufweisen.

29. Mehrfachextrusionskopf nach Anspruch 28, **dadurch gekennzeichnet, dass** an den Übertragungselementen (19) Stellelemente (26, 26') angeordnet sind, wobei durch Betätigung eines Stellelemente (29) die Grundeinstellung des Extrusionswerkzeuges (2) durch eine Vordeformation und/oder eine Positionskorrektur der Hülse (17) veränderbar ist.

## Claims

1. A method for manufacturing blow-molded hollow plastic bodies, in which tubular preforms (10) are simultaneously extruded from at least two adjacently arranged extrusion dies (2) of a multiple extrusion head (1) and fed to blow moulding cavities (4) of a clamping unit (3), in which the preforms (10) are expanded into hollow plastic bodies (13) by means of blowing air after the blow moulding cavities (4) have been closed,
wherein the preforms (10) exit through a die gap (s) of the extrusion dies (2), which is defined by a mandrel (6) and a die body (3), and the die gap width (s) of the extrusion dies (2) is varied during the extrusion due to actuations of the mandrels (6) and/or the die bodies (7),
**characterized in that**
the melt distribution of the preforms (10) exiting from the extrusion dies (2) is respectively varied in the circumferential direction during the extrusion by deforming an elastic sleeve (17) defining the die gap (s),
wherein at least one program-controlled individual drive (18) is assigned to each extrusion die (2) and only acts upon the elastically deformable sleeve (17) of the assigned extrusion die (2) by means of a transmission element (19), and
wherein the transmission elements (19) respectively engage into a region between two adjacent extrusion dies (2) and act upon the circumference of the elastically deformable sleeves (17) in this region.

2. The method according to claim 1, **characterized in that** the transmission elements (19) respectively act upon the circumference of the sleeves (17) in at least one force application point (20), wherein the force application point (20) is located in a circumferential section of the sleeve (17) that extends over an angle of no more than ± 45° referred to the mold parting plane (x, z) of the blow molding cavities (4).

3. The method according to claim 1, **characterized in that** the transmission elements (19) act upon the circumference of the elastically deformable sleeves (17) at force application points (20) that lie in the mold parting plane (x, z) of the blow moulding cavities (4).

4. The method according to one of claims 1-3, **characterized in that** the transmission elements (19) act upon an outer surface area of the sleeves (17) during an actuation of their assigned drive (18), and **in that** the sleeves (17) are respectively supported on and/or connected to at least one circumferentially arranged counter bearing (23).

5. The method according to one of claims 1-4, **characterized in that** the transmission element (19) assigned to an individual drive (18) features kinematically coupled elements (24, 24') that act upon the sleeve (17) in a paired fashion and exert radial compressive forces or tensile forces upon both sides of the assigned sleeve (17) during an actuation of the individual drive (18).

6. The method according to one of claims 1-4, **characterized in that** the transmission elements (19) transmit radial tensile forces to the surface area of the sleeves (17).

7. The method according to one of claims 1-3, **characterized in that** two program-controlled individual drives (18) are assigned to the extrusion dies (2), wherein these individual drives only act upon the elastically deformable sleeve (17) of the assigned extrusion die (2) by means of assigned transmission elements (19) and exert tensile forces and/or compressive forces upon a surface area of the sleeve (17), and **in that** the sleeve (17) is deformed, tilted or radially displaced by means of program-controlled actuations of the two individual drives (18).

8. The method according to claim 7, **characterized in that** the sleeve (17) is deformed by means of actuating strokes of the transmission elements (19) acting thereupon, which are oppositely directed and identical in length or differ in length, as well as tilted or radially displaced in the direction of the deformation axis, or **in that** the sleeve is radially tilted or displaced without deformation by means of actuating strokes of the transmission elements (19), which are identically directed and identical in length.

9. The method according to one of claims 1-8, **characterized in that** basic adjustments are carried out on the extrusion dies (2), wherein the sleeves (17) are pre-deformed and/or the position of the sleeves (17) is corrected and/or the die body (7) and the mandrel (6) are adjusted relative to one another during the course of these adjustments.

10. A multiple extrusion head for carrying out the method according to one of claims 1-9, featuring at least two adjacently arranged extrusion dies (2) with a die gap (s) that is defined by a mandrel (6) and a die body (7),
**characterized in that**
the extrusion dies (2) are respectively equipped with at least one elastically deformable sleeve (17), which forms a wall section of the die gap (s) and is arranged in the die body (7) of the extrusion die (2),
wherein at least one program-controlled individual drive (18) is assigned to each extrusion die (2) and only acts upon the elastically deformable sleeve (17) of the assigned extrusion die (2) by means of a transmission element (19), and
wherein the transmission elements (19) respectively engage into a region between adjacent extrusion dies (2) and act upon a circumferential section of the elastically deformable sleeve (17) assigned to the individual drive (18) in this region.

11. The multiple extrusion head according to claim 10, **characterized in that** the transmission elements (19) act upon an outer surface area of the sleeves (17).

12. The multiple extrusion head according to claim 10 or 11, **characterized in that** the transmission elements (19) act upon an outer surface area of the sleeves (17) during an actuation of their assigned individual drive (18), and **in that** the sleeves (17) are respectively supported on or connected to at least one circumferentially arranged counter bearing (23).

13. The multiple extrusion head according to one of claims 10-12, **characterized in that** the transmission element (19) assigned to an individual drive (18) features kinematically coupled elements (24, 24') that act upon the sleeve (17) in a paired fashion and exert radial compressive forces or tensile forces upon both sides of the assigned sleeve (17) during an actuation of the individual drive (18).

14. The multiple extrusion head according to claim 13, **characterized in that** the elements (24, 24') of the transmission element (19) carry out an oppositely directed pincer-like motion during an actuation of the individual drive (18).

15. The multiple extrusion head according to claim 13 or 14, **characterized in that** the elements (24, 24') are fastened on the sleeve (17) in an articulated fashion and connected to the individual drive (18) by means of a toggle lever mechanism (36).

16. The multiple extrusion head according to one of claims 10-14, **characterized in that** the transmission elements (19) are realized in the form of a slide (28), wherein the slides (28) respectively feature a control surface that cooperates with an opposite surface on the assigned sleeve (17).

17. The multiple extrusion head according to one of claims 10-14, **characterized in that** the transmission elements (19) are realized in the form of a cam arrangement that respectively features at least one rotatably mounted camshaft (38).

18. The multiple extrusion head according to claim 16 or 17, **characterized in that** the transmission elements (19) act upon control surfaces (32, 32'), which are connected to the sleeves (17) and transmit tensile forces to the sleeves (17) during an actuation of the transmission elements (19).

19. The multiple extrusion head according to one of claims 16-18, **characterized in that** the transmission elements (19) act upon control surfaces (32, 32'), which are connected to the sleeves (17) and transmit a tensile force or a compressive force to the sleeves (17) during an actuation of the transmission elements (19) in dependence on the actuating stroke.

20. The multiple extrusion head according to one of claims 16-19, **characterized in that** the transmission elements (19) engage into connecting elements (31), which are connected to the sleeves (17) and feature control surfaces (32, 32') that cooperate with the transmission elements in order to transmit radial compressive or tensile forces.

21. The multiple extrusion head according to one of claims 10-14, **characterized in that** the transmission elements (19) are realized in the form of a rotary rings (34), which feature at least one control surface (33) on a circumferential surface adjacent to the sleeves (17), and **in that** the control surface (33) cooperates with an opposite surface (35) on the sleeve (17) and exerts pressure upon the assigned sleeve (17) during a rotational motion of the rotary ring (34).

22. The multiple extrusion head according to one of claims 10-14, **characterized in that** the transmission elements (19) feature an articulation arrangement acting upon the sleeve (17).

23. The multiple extrusion head according to claim 10 or 11, **characterized in that** two program-controlled individual drives (18) are assigned to each extrusion die (2) of the multiple extrusion head (1), wherein these individual drives only act upon the elastically deformable sleeve (17) of the assigned extrusion die by means of assigned transmission elements (19) and exert tensile forces or compressive forces upon a surface area of the sleeve (17), and **in that** the sleeve (17) can be deformed, tilted or radially displaced by means of program-controlled actuations of the two individual drives.

24. The multiple extrusion head according to one of claims 10-23, **characterized in that** the transmission elements (19) feature a rod assembly (44), which reduces an actuating stroke (h₁) of the individual drive (18) connected to the rod assembly (44) to a shorter effective actuating stroke (h₂) on the elastically deformable sleeve (17).

25. The multiple extrusion head according to claim 24, **characterized in that** the rod assembly (44) features a lever (45), which is pivotably mounted in a bearing (50) on one end and connected to an actuator (46) of the individual drive (18) in an articulated fashion on its other end, and **in that** a transmission element (47) for transmitting motions is provided between the lever (45) and the elastically deformable sleeve (17), wherein said transmission element is connected to a coupling point (48) between the force application point (49) of the individual drive (18) acting upon the lever (45) and the bearing (50) on the end of the lever (45).

26. The multiple extrusion head according to one of claims 10-25, **characterized in that** the die bodies (7) are arranged in a horizontally adjustable or tiltable fashion, and **in that** at least one drive is provided for adjusting the die bodies (7) relative to the mandrels (6) of the extrusion dies (2).

27. The multiple extrusion head according to claim 26, **characterized in that** the effective direction of the drive acting upon the at least one die body (7) is aligned with the deformation axis defined by the force application points (20) of the transmission elements (19) or extends parallel to a deformation-neutral axis of the sleeves (17).

28. The multiple extrusion head according to one of claims 10-27, **characterized in that** the extrusion dies (2) feature individually assigned and independently activatable actuating elements (26, 27) for changing a basic adjustment of the die gap geometry.

29. The multiple extrusion head according to claim 28, **characterized in that** actuating elements (26, 26') are arranged on the transmission elements (19), wherein the basic adjustment of the extrusion die (2) can be changed in the form of a pre-deformation and/or a position correction of the sleeve (17) by activating an actuating element (29).

## Revendications

1. Procédé destiné à la fabrication de corps creux en matière plastique soufflés sur matrice, lors duquel on extrude en même temps deux ébauches (10) tubulaires hors d'au moins deux outils d'extrusion (2) placés côte à côte d'une tête d'extrusion (1) multiple et on les alimente vers des cavités (4) de moule de soufflage d'une unité de fermeture (3) dans laquelle des ébauches (10) sont élargies en corps creux (13) en matière plastique, après la fermeture des cavités (4) de moule de soufflage,
les ébauches (10) sortant d'une fente de tuyère (s) délimitée par un mandrin (6) et un corps de tuyère (3) des outils d'extrusion (2) et pendant l'extrusion, la largeur de la fente de tuyère (s) des outils d'extrusion (2) étant modifiée par des déplacements en réglage des mandrins (6) et/ou des corps de tuyère (7),
**caractérisé en ce**
**qu'**on modifie pendant l'extrusion la distribution dans la direction périphérique de la masse fondue des ébauches (10) sortant des outils d'extrusion (2) chaque fois par déformation d'une douille (17) élastique délimitant la fente (s) de tuyère,
sachant qu'à chaque outil d'extrusion (2), on associe au moins un entraînement individuel (18) commandé par programme qui à l'aide d'un élément de transmission (19) n'agit que sur la douille (17) élastiquement déformable de l'outil d'extrusion (2) associé et
les éléments de transmission (19) s'engageant respectivement dans une zone entre deux outils d'extrusion (2) voisins et y agissant sur la périphérie des douilles (17) élastiquement déformables.

2. Procédé selon la revendication 1, **caractérisé en ce que** les éléments de transmission (19) agissent chacun sur au moins un point d'application de force (20) sur la périphérie des douilles (17), le point d'application de force (20) se trouvant dans un segment périphérique de la douille (17) qui en rapport au plan de séparation de moule (x, z) des cavités (4) du moule de soufflage s'étend sur un angle d'un maximum de ± 45°.

3. Procédé selon la revendication 1, **caractérisé en ce que** les éléments de transmission (19) agissent sur des points d'application de force (20) sur la périphérie des douilles (17) élastiquement déformables qui se situent dans le plan de séparation de moule (x, z) des cavités (4) du moule de soufflage.

4. Procédé selon l'une quelconque des revendications 1 à 3, **caractérisé en ce que** lors d'un déplacement de réglage de l'entraînement (18) qui leur est associé, les éléments de transmission (19) agissent sur une surface d'enveloppe extérieure des douilles (17) et **en ce que** les douilles (17) sont appuyées et/ou attachées chacune sur au moins une butée (23) placée côté périphérie.

5. Procédé selon l'une quelconque des revendications 1 à 4, **caractérisé en ce que** l'élément de transmission (19) associé à un entraînement individuel (18) comporte des éléments (24, 24') cinématiquement couplés qui agissent par paires sur la douille (17) et lors d'un déplacement de réglage de l'entraînement individuel (18), exercent de part et d'autre des forces de pression ou des forces de traction radiales sur la douille (17) associée.

6. Procédé selon l'une quelconque des revendications 1 à 4, **caractérisé en ce que** les éléments de transmission (19) transmettent des forces de traction radiales sur la surface d'enveloppe des douilles (17).

7. Procédé selon l'une quelconque des revendications 1 à 3, **caractérisé en ce qu'**aux outils d'extrusion (2), on associe chaque fois deux entraînements individuels (18) commandés par programme, qui à l'aide d'éléments de transmission (19) associés n'agissent que sur la douille (17) élastiquement déformable de l'outil d'extrusion (2) associé et exercent des forces de traction et/ou des forces de pression sur une surface d'enveloppe de la douille (17) et **en ce que** la douille (17) est déformée, pivotée ou déplacée en direction radiale par des déplacements de réglage commandés par programme des deux entraînements individuels (18).

8. Procédé selon la revendication 7, **caractérisé en ce que** la douille (17) est déformée par des courses de réglage d'une valeur identique des éléments de transmission (19) en mouvement opposé ou par des courses de réglage d'une valeur différente et est pivotée ou déplacée en direction radiale dans la direction de l'axe de déformation ou **en ce que** la douille est pivotée ou déplacée en direction radiale sans déformation par des déplacements de réglage de même valeur et de même orientation des éléments de transmission (19).

9. Procédé selon l'une quelconque des revendications 1 à 8, **caractérisé en ce que** sur les outils d'extrusion (2), on procède à des réglages de base, au cours desdits réglages, les douilles (17) étant prédéformées et/ou la position des douilles (17) étant corrigée et/ou le corps de tuyère (7) et le mandrin (6) étant ajustés l'un par rapport à l'autre.

10. Tête d'extrusion multiple, destinée à réaliser le procédé selon l'une quelconque des revendications 1 à 9 qui comporte au moins deux outils d'extrusion (2) placés côte à côte avec une fente de tuyère (s) délimitée par un mandrin (6) et par un corps de tuyère (7),
**caractérisée en ce que**
les outils d'extrusion (2) sont équipés chacun d'au moins une douille (17) élastiquement déformable qui forme une portion de paroi de la fente de tuyère (s) et qui est placée dans le corps de tuyère (7) de l'outil d'extrusion (2),
à chaque outil d'extrusion (2) étant associé au moins un entraînement individuel (18) commandé par programme, qui à l'aide d'un élément de transmission (19) n'agit que sur la douille (17) élastiquement déformable de l'outil d'extrusion (2) associé et
les éléments de transmission (19) s'engageant chacun dans la zone entre des outils d'extrusion (2) voisins et y agissant sur une partie périphérique de la douille (17) élastiquement déformable associée à l'entraînement individuel(18).

11. Tête d'extrusion multiple selon la revendication 10, **caractérisée en ce que** les éléments de transmission (19) agissent sur une surface d'enveloppe extérieure des douilles (17).

12. Tête d'extrusion multiple selon la revendication 10 ou la revendication 11, **caractérisée en ce que** lors d'un déplacement de réglage de leur entraînement individuel (18) associé, les éléments de transmission (19) agissent sur une surface d'enveloppe extérieure des douilles (17) et **en ce que** les douilles (17) sont appuyées et/ou attachées chacune sur au moins une butée (23) placée côté périphérie.

13. Tête d'extrusion multiple selon l'une quelconque des revendications 10 à 12, **caractérisée en ce que** l'élément de transmission (19) associé à un entraînement individuel (18) comporte des éléments (24, 24') cinématiquement couplés qui agissent par paires sur la douille (17) et lors d'un déplacement de réglage de l'entraînement individuel (18) exercent de part et d'autre des forces de pression ou des forces de traction sur la douille (17) associée.

14. Tête d'extrusion multiple selon la revendication 13, **caractérisée en ce que** lors d'un déplacement de réglage de l'entraînement individuel (18), les éléments (24, 24') de l'élément de transmission (19) exercent un mouvement de pinces en sens opposé.

15. Tête d'extrusion multiple selon la revendication 13 ou la revendication 14, **caractérisée en ce que** les éléments (24, 24') sont fixés de manière articulée sur la douille (17) et sont raccordés sur l'entraînement individuel (18) par l'intermédiaire d'un agencement de genouillères (36).

16. Tête d'extrusion multiple selon l'une quelconque des revendications 10 à 14, **caractérisée en ce que** les éléments de transmission (19) sont conçus en tant que coulisseaux (28), les coulisseaux (28) comportant chacun une surface de commande qui coopère avec une surface antagoniste sur la douille (17) associée.

17. Tête d'extrusion multiple selon l'une quelconque des revendications 10 à 14, **caractérisée en ce que** les éléments de transmission (19) sont conçus en tant qu'un agencement d'excentriques qui comportent chacun au moins un arbre d'excentrique (38) logé en rotation.

18. Tête d'extrusion multiple selon la revendication 16 ou la revendication 17, **caractérisée en ce que** les éléments de transmission (19) agissent sur des surfaces de commande (32, 32') qui sont reliées avec les douilles (17) et qui lors d'un déplacement de réglage des éléments de transmission (19) transmettent des forces de traction sur les douilles (17).

19. Tête d'extrusion multiple selon l'une quelconque des revendications 16 à 18, **caractérisée en ce que** les éléments de transmission (19) agissent sur des surfaces de commande (32, 32') qui sont reliées avec les douilles (17) et qui lors d'un déplacement de réglage des éléments de transmission (19) transmettent en fonction de la course de réglage une force de traction ou une force de pression sur les douilles (17).

20. Tête d'extrusion multiple selon l'une quelconque des revendications 16 à 19, **caractérisée en ce que** les éléments de transmission (19) s'engagent dans des éléments de raccordement (31) qui sont reliés avec des douilles (17) et qui comportent des surfaces de commande (32, 32') coopérant avec les éléments de transmission pour transmettre des forces de pression ou des forces de traction radiales.

21. Tête d'extrusion multiple selon l'une quelconque des revendications 10 à 14, **caractérisée en ce que** les éléments de transmission (19) sont conçus en tant que bagues tournantes (34) qui sur une surface périphérique voisine des douilles (17) comportent au moins une surface de commande (33) et **en ce que** lors d'un déplacement en rotation de la bague tournante (34), la surface de commande (33) coopère avec une surface antagoniste (35) sur la douille (17) et exerce une pression sur la douille (17) associée.

22. Tête d'extrusion multiple selon l'une quelconque des revendications 10 à 14, **caractérisée en ce que** les éléments de transmission (19) comportent un agencement d'articulations qui agit sur la douille (17).

23. Tête d'extrusion multiple selon la revendication 10 ou la revendication 11, **caractérisée en ce qu'**à chaque outil d'extrusion (2) de la tête d'extrusion multiple (1) sont associés deux entraînements individuels (18) commandés par programme, qui à l'aide d'éléments de transmission (19) associés n'agissent que sur la douille (17) élastiquement déformable de l'outil d'extrusion associé et qui exercent des forces de traction ou des forces de pression sur une surface d'enveloppe de la douille (17) et **en ce que** par des déplacements de réglage commandés par programme des deux entraînements individuels, la douille (17) peut être déformée, pivotée ou déplacée en direction radiale.

24. Tête d'extrusion multiple selon l'une quelconque des revendications 10 à 23, **caractérisée en ce que** les éléments de transmission (19) comportent une tringlerie (44) qui démultiplie une course de réglage (h₁) de l'entraînement individuel (18) relié avec la tringlerie (44) en une course de réglage (h₂) plus petite agissant sur la douille (17) élastiquement déformable.

25. Tête d'extrusion multiple selon la revendication 24, **caractérisée en ce que** la tringlerie (44) comporte un levier (45), qui par une extrémité est logé en étant mobile en pivotement dans un logement (50) et par son autre extrémité est relié de manière articulée avec un actionneur (46) de l'entraînement individuel (18) et **en ce qu'**entre le levier (45) et la douille (17) élastiquement déformable, il est prévu un élément de transmission (47) pour la transmission du déplacement, lequel est raccordé au levier (45) sur un point de couplage (48) entre le point d'application de force (49) de l'entraînement individuel (18) agissant sur le levier (45) et le logement (50) placé côté extrémité.

26. Tête d'extrusion multiple selon l'une quelconque des revendications 10 à 25, **caractérisée en ce que** le corps de tuyère (7) est placé en étant ajustable à l'horizontale ou déplaçable en basculement et **en ce qu'**il est prévu au moins un entraînement pour ajuster les corps de tuyère (7) par rapport aux mandrins (6) des outils d'extrusion (2).

27. Tête d'extrusion multiple selon la revendication 26, **caractérisée en ce que** la direction d'action de l'entraînement agissant sur au moins un corps de tuyère (7) est alignée sur l'axe de déformation prédéfini par les points d'application de force (20) des éléments d'entraînement (19) ou s'étend à la parallèle d'un axe à déformation neutre des douilles (17).

28. Tête d'extrusion multiple selon l'une quelconque des revendications 10 à 27, **caractérisée en ce que** les outils d'extrusion (2) comportent des éléments de réglage (26, 27) susceptibles d'être manoeuvrés indépendamment les uns des autres, pour modifier un réglage de base de la géométrie de la fente de tuyère.

29. Tête d'extrusion multiple selon la revendication 28, **caractérisée en ce que** sur les éléments de transmission (19) sont placés des éléments de réglage (26, 26'), par manoeuvre d'un élément de réglage (29), le réglage de base de l'outil d'extrusion (2) étant modifiable par une pré-déformation et/ou une correction de position de la douille (17).
